# EUROPÄISCHE PATENTANMELDUNG

(11) **EP 4 338 925 A1**
(43) Veröffentlichungstag der Anmeldung: **20.03.2024**
(21) Anmeldenummer: 22196200.4
(22) Anmeldetag: 16.09.2022
(51) Int. Cl.: B29C 45/76

(54) **COMPUTERIMPLEMENTIERTES VERFAHREN ZUR ERMITTLUNG EINER VORHERSAGE-GEWICHTSGRÖSSE EINES DURCH EINE SPRITZGUSS-VORRICHTUNG HERGESTELLTEN PRODUKTES, SOWIE STEUERUNGSVERFAHREN UND STEUERUNGSSYSTEM**

(71) Anmelder: Siemens Aktiengesellschaft, 80333 München (DE)
(72) Erfinder: Bischoff, Martin, 85653 Aying, Großhelfendorf (DE); Geier, Ingo, 90556 Cadolzburg (DE); Papdo Tchasse, Hans Dimitri, 90489 Nürnberg (DE); Tokic, Michel, 88069 Tettnang (DE); Vasiadis, Georgios, 91058 Erlangen (DE); von Beuningen, Anja, 99085 Erfurt (DE)
(74) Vertreter: Siemens Patent Attorneys

(57) **Zusammenfassung**

Die vorliegende Erfindung betrifft ein computerimplementiertes Verfahren zum Trainieren eines ML-Modells (252) vermittels eines maschinellen Lernverfahrens, wobei das trainierte ML-Modell (252) zur Ermittlung einer Vorhersage-Gewichtsgröße eines vermittels einer Spritzguss-Vorrichtung (100) hergestellten Produktes ausgebildet und eingerichtet ist, das Verfahren umfassend die nachfolgenden Verfahrensschritte:
- Erfassen und/oder Ermitteln von ersten Produktionsparametern der Spritzguss-Vorrichtung (100) während der Herstellung eines ersten Produkts,
- Erfassen und/oder Ermitteln von Vorgänger-Produktionsparametern der Spritzguss-Vorrichtung (100) während der Herstellung mindestens eines Vorgänger-Produkts, sowie jeweils mindestens einer Vorgänger-Gewichtsgröße des mindestens einen Vorgänger-Produkts,
- Erfassen und/oder Ermitteln einer ersten Gewichtsgröße für das erste Produkt, und
- Trainieren des ML-Modells (252) vermittels einer Methode des überwachten Lernens mit den ersten Produktparametern, den weiteren Produktparametern, der mindestens einen Vorgänger-Gewichtsgröße, sowie der ersten Gewichtsgröße.

## Beschreibung

Die vorliegende Erfindung betrifft ein computerimplementiertes Verfahren, welches zur Ermittlung mindestens eines Produktionsparameters für ein vermittels einer SpritzgussVorrichtung hergestelltes Produkt ausgebildet und eingerichtet ist, sowie ein Steuerungsverfahren und ein Steuerungssystem für die Spritzguss-Vorrichtung.

Derartige Verfahren sind aus dem Stand der Technik bekannt.

So offenbart beispielsweise das Europäische Patent EP 3 691 855 B1 ein Verfahren zur Bestimmung von ProzessparameterKurven für eine Spritzguss-Vorrichtung unter Verwendung einer Finite-Elemente-Simulation der Spritzguss-Vorrichtung. Die ermittelten Prozessparameter-Kurven werden dann zur Steuerung einer Flussrate des eingespritzten Kunststoffs beim Betrieb der Spritzguss-Vorrichtung herangezogen.

Es ist ein Nachteil des Standes der Technik, dass nur bereits im Vorgriff auf einen Produktionsprozess festgelegte Prozessparameter bei der Überwachung eines Spritzguss-Produktionsprozesses berücksichtigt werden können. Da ein Spritzguss-Produktionsprozess durch eine große Anzahl an verschiedensten Prozessparametern beeinflusst wird, müssen gegebenenfalls in gesonderten, und in der Regel aufwändigen, Simulation-Test-Zyklen für einen bestimmten Spritzguss-Prozess aussagekräftige Prozessparameterkurven ermittelt werden.

Daher ist es eine Aufgabe der vorliegenden Erfindung, ein Verfahren und/oder eine Vorrichtung zur Verfügung zu stellen, welche eine schnellere, einfachere und/oder flexiblere Überwachung und/oder Steuerung eines Spritzguss-Prozesses ermöglicht.

Diese Aufgabe wird gelöst durch ein Verfahren mit den Merkmalen des Patentanspruchs 1.

Ein solches Verfahren ist als ein computerimplementiertes Verfahren zum Trainieren eines ML-Modells vermittels eines maschinellen Lernverfahrens ausgebildet und eingerichtet, wobei das trainierte ML-Modell zur Ermittlung einer Vorhersage-Gewichtsgröße eines vermittels einer Spritzguss-Vorrichtung hergestellten Produktes ausgebildet und eingerichtet ist. Das Verfahren umfasst die nachfolgenden Verfahrensschritte:
- Erfassen und/oder Ermitteln von ersten Produktionsparametern der Spritzguss-Vorrichtung während der Herstellung eines ersten Produkts,
- Erfassen und/oder Ermitteln von Vorgänger-Produktionsparametern der Spritzguss-Vorrichtung während der Herstellung mindestens eines Vorgänger-Produkts, sowie jeweils mindestens einer Vorgänger-Gewichtsgröße des mindestens einen Vorgänger-Produkts,
- Erfassen und/oder Ermitteln einer ersten Gewichtsgröße für das erste Produkt,
- Trainieren des ML-Modells vermittels einer Methode des überwachten Lernens mit den ersten Produktparametern, den weiteren Produktparametern, der mindestens einen Vorgänger-Gewichtsgröße, sowie der ersten Gewichtsgröße.

Dadurch, dass es für das Training eines ML-Modells ohne großen Zusatz Aufwand möglich ist, auch eine große Vielzahl von Produktionsparametern zu berücksichtigen, ist es möglich, eine einfachere und/oder flexiblere Überwachung eines Spritzgussprozesses zu erreichen. So ist es beispielsweise vermittels des beschriebenen trainierten ML-Modells möglich, dieses mit einer Vielzahl von Parametern zu trainieren und dann letztendlich für den Einsatz des ML-Modells nur eine Auswahl von Prozessparametern operativ zu verwenden. Dabei können mit demselben trainierten ML-Modell die Zahl und Auswahl der Prozessparameter flexibel angepasst werden.

Das vorstehend genannte Verfahren beschreibt das Training eines entsprechenden ML-Modells. Weitere in der vorliegenden Beschreibung beschriebenen und erläuterten Verfahren haben den Einsatz eines solchen trainierten ML-Modells innerhalb einer Spritzguss-Vorrichtung, die sogenannte Inferenz unter Verwendung des ML-Modells, sowie eine entsprechende Steuereinrichtung für die Spritzguss-Vorrichtung zum Gegenstand.

Ein computerimplementiertes Verfahren gemäß der vorliegenden Beschreibung kann beispielsweise auf einer Recheneinrichtung, in einer elektronischen Steuerung, in einer Steuereinrichtung, in einem Controller, in einem EDGE Device, in einer Cloud und/oder in einer vergleichbaren Computereinrichtung ablaufen bzw. dort ausgeführt werden. Dabei kann beispielsweise ein entsprechendes Computerprogrammprodukt auf einer oder mehreren der genannten elektronischen Einrichtungen implementiert sein, welches beim Ablauf auf dieser elektronischen Einrichtung die Verfahrensschritte des genannten computerimplementierten Verfahrens erzeugt.

Dabei kann nach dem Trainieren eines ML-Modells nach einem Verfahren gemäß der vorliegenden Beschreibung ein Abspeichern des trainierten ML-Modells in einer elektronischen Speichereinrichtung erfolgen. Dabei kann die elektronische Speichereinrichtung beispielsweise Teil der elektronischen Einrichtung sein, auf welcher auch das ML-Modell trainiert wurde. Weiterhin kann die elektronische Speichereinrichtung eine selbstständige Einrichtung oder auch Teil einer weiteren elektronischen Einrichtung gemäß der vorliegenden Beschreibung sein.

Das erste Produkt kann dabei jedes Produkt sein, welche sich mit einer Spritzguss-Vorrichtung herstellen lässt oder durch eine solche hergestellt wurde. Dabei kann das erste Produkt beispielsweise aus jedem Kunststoffmaterial oder vergleichbaren Material bestehe, welches mit einer SpritzgussVorrichtung verarbeitbar ist. Ein solches Material ist beispielsweise Polycarbonat oder jegliche Material Kombination, welche Polycarbonat enthält. Das Produkt kann auch aus verschiedenen Materialien oder Materialkomponenten oder Materialmischungen bestehen, soweit sie für eine Verarbeitung in einer Spritzguss-Vorrichtung geeignet sind oder verwendet werden.

Nachfolgend wird ein beispielhafter Aufbau für eine Spritzgießmaschine 100 beschrieben, wie sie z.B. in Figur 1 schematisch dargestellt ist. Beispielhafte Steuereinrichtungen 210 für die Spritzgießmaschine 100 sind in den Figuren 2 und 3 dargestellt. Die nachfolgend genannten Bezugszeichen beziehen sich auf die beigefügten Figuren.

Die Hauptbaugruppen einer Spritzgießmaschine 100 oder Spritzgussmaschine 100 für die Thermoplast-Verarbeitung sind:
- eine Plastifizier- und Einspritzeinheit 110,
- eine Schließeinheit 130 und
- eine Steuerung 210,
wobei die Steuerung 210 heutzutage oft im Maschinenbett der Spritzgussmaschine 100 oder in einem Schaltschrank neben der Maschine 100 eingebaut ist.

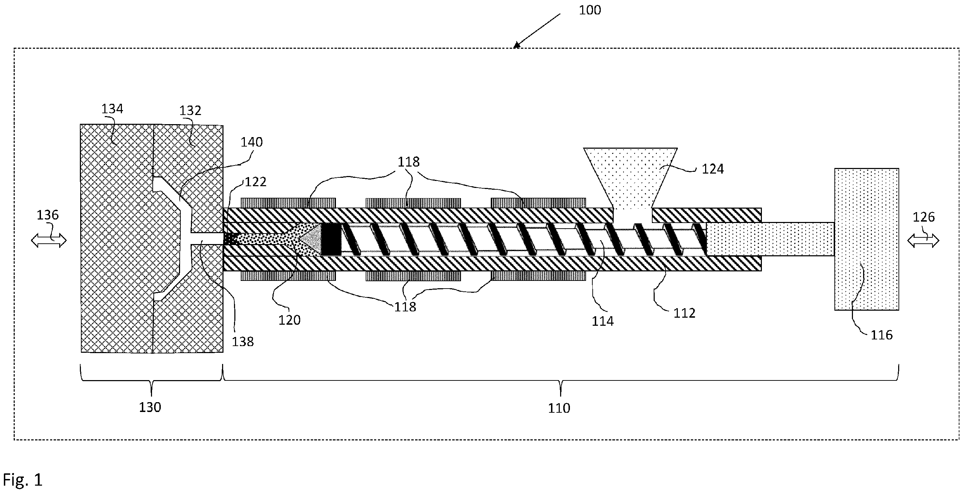

Die Plastifizier- und Einspritzeinheit 110 besteht unter anderem aus einem Zylinder 112 mit Heizbändern 118 zum Erhitzen des Zylinders 112, einer Schnecke 114, einer Düse 122, eine Rückstromsperre (nicht in Figur 1 dargestellt) und eventuell einem Trichter 124 oder Granulatbehälter 124. Die Achsen dieser Einheit 110 können unter anderem hydraulisch oder elektrisch betrieben werden.

Der Zylinder 112 ist ein rohrförmige Sicherheitsbauteil, welches im Allgemeinen eine Schnecke 114 und eine Rückstromsperre (nicht in Figur 1 dargestellt) umhüllt und den Zylinderkopf oder Druckkolben 116 aufnimmt. Die Heizbänder 118 erzeugen die erforderliche Wärme, die in Zusammenwirkung mit der Reibung zum Aufschmelzen des zum Herstellen des entsprechenden Produkts verwendeten Kunststoffgranulats führt.

Die Schnecke 114 liegt im Zylinderhohlraum. Es gibt je nach Anwendungsfall und verarbeitetem Kunststoff verschiedene Schneckenvarianten. Allerdings hat eine Standard- oder Dreizonenschnecke fünf Aufgaben in Bezug auf das Granulat, nämlich einziehen, verdichten, aufschmelzen, homogenisieren und einspritzen. Das Granulat wird zuerst aus dem Trichter 124 in die Einzugszone gefördert und wird durch eine rotierende Bewegung der Schnecke in Richtung Düse 122 transportiert. Auf seinem Weg nach vorne wird es dann in einer Kompressionsoder Umwandlungszone verdichtet, entlüftet und aufgeschmolzen. Anschließend gelangt es in eine Austrags- oder Meteringszone, wo es weiter homogenisiert und komprimiert wird. Zum Schluss gelangt die Schmelze in einen Schneckenvorraum 120, wo es für das Einspritzen gesammelt wird.

Während seiner Bewegung kommt das Granulat mit der inneren Zylinderwand in Berührung. Aus dieser Reibung wird Wärme erzeugt, die zum Aufschmelzen und Homogenisieren des Granulats beiträgt.

Der Trichter 124 erfüllt z.B. die Funktion eines Granulatbehälters 124, der das Granulat des zu verarbeitenden Kunststoffs enthält und direkt an dem Zylinder 112 eingebaut ist. Er ist jedoch optional, denn es ist möglich, das Material von einer zentralen Materialversorgung direkt in die Einzugszone der Schnecke zu fördern.

Die Schließeinheit 130 umfasst das Werkzeug 130 mit einer festen Werkzeughälfte 132 und einer beweglichen Werkzeughälfte 134 sowie Antriebskomponenten (nicht in Figur 1 dargestellt) für ein Öffnungs- und Schließbewegung des Werkzeugs 130 durch Bewegung (symbolisiert durch einen Pfeil 136 in Figur 1) der beweglichen Werkzeughälfte 134. Die Anforderung an den Werkzeugantrieb ist, dass er das die Werkzeughälften 132, 134 auch bei hohen Einspritzdrücken geschlossen hält. Die Werkzeugbewegung der beweglichen Werkzeughälfte 134 kann mechanisch mit einem Kniehebel oder einer Spindel, hydraulisch sowie hydromechanisch betrieben werden. Diese Bewegung wird in den meisten Fällen über Säulen geführt, die auch das gesamte Werkzeug 130 tragen.

Das Werkzeug 130 nimmt die Schmelze auf und verteilt sie. Außerdem ist es für das Ausformen und das Entformen des hergestellten Produkts, auch Formteil genannt, verantwortlich. Das Aufnehmen und Verteilen der Schmelze bewirkt ein Angusskanal 138. Der Angusskanal 138 stellt die Verbindung zwischen der Düse 122 und einer Kavität 140 dar. Die Kavität 140 oder das Formnest 140 ist ein in der Regel zwischen den Werkzeughälften 132, 134 gebildeter Hohlraum, der während des Einspritzens mit der Schmelze gefüllt wird und in dem sich die Formmasse durch einen Erstarrungsvorgang verfestigt. In diesem Raum wird das herzustellende Produkt ausgeformt. Entscheidend beim Ausformen sind Temperierkanäle (nicht in Figur 1 dargestellt), die die Abkühlung der Formmasse beschleunigen. Nachdem die Schmelze abgekühlt und das Teil hart geworden ist, wird es von einem Auswerfersystem (nicht in Figur 1 dargestellt) entformt, das heißt aus dem Werkzeug entfernt.

Nachfolgend wird ein beispielhafter Verarbeitungszyklus einer Spritzguss-Maschine 100 beschrieben. Die dabei genannten Bezugszeichen beziehen sich auf die beigefügten Figuren.

Der Ausgangszustand für einen Verarbeitungszyklus des Kunststoffspritzgießens ist, wenn das Werkzeug 130 geöffnet ist, die Plastifizier- und Einspritzeinheit 110 sowie die Schnecke 114 auf ihrer jeweiligen hinteren Endstellung zurückgezogen sind, und die Düse 122, sofern Verschluss vorhanden, verschlossen ist, sodass kein Material aus dem Zylinder 112 fließen kann. Außerdem sind das Werkzeug 130 und die Heizbänder 118 auf die erforderlichen Temperaturen eingestellt. In diesem Zustand ist der Schneckenvorraum 120 mit Kunststoffschmelze gefüllt.

In einem ersten Schritt wird das Werkzeug 130 geschlossen und die Schließkraft aufgebaut. Dieses Schließen des Werkzeugs 130 ist durch einen Pfeil 136 in Figur 1 symbolisiert. Die Plastifizier- und Einspritzeinheit 110 wird in Richtung Werkzeug 130 bewegt, so dass die Düse 122 den Anguss 138 berührt und beide mit einer hohen Kraft verbunden werden. Die Düse 122 wird dann geöffnet, im Fall einer Verschlussdüse 122, und das thermoplastische Fluid wird durch eine translatorische Bewegung der Schnecke 114 in die Werkzeugkavität 140 eingespritzt. Diese translatorische Bewegung der Schnecke 114 wird durch die Bewegung eines Druckkolbens 116 bewirkt, und ist durch einen Pfeil 126 in Figur 1 symbolisiert. Die Einstellgröße bei dieser Phase ist meistens die Einspritzgeschwindigkeit, die so hoch gesetzt werden muss, dass die Schmelze erst in der Kavität 140 abkühlt. Das Einspritzen ist beendet, wenn die Kavität 140 mit Schmelze gefüllt ist.

Sobald die Kavität 140 gefüllt ist, beginnt die Formmasse abzukühlen, und zwar von der Oberfläche nach dem Inneren. Beim Abkühlen nimmt das Volumen der Formmasse ab. Deswegen wird noch Schmelze in die Kavität nachgedrückt, um eine Schwindung der Masse zu vermeiden. Dieser Vorgang erfolgt nach der Vorgabe eines gewünschten Druckverlaufs, wobei dieser sogenannte "Nachdruck" so einzustellen ist, dass die Werkzeugschließkraft nicht überwunden wird. Der Zeitpunkt, in dem das Einspritzen endet und die gerade beschriebene Nachdruckphase beginnt, wird Umschaltpunkt genannt.

Nach der Nachdruckphase wird die Plastifizier- und Einspritzeinheit 110 auf ihre Ausgangsposition zurückgezogen, was wiederum durch den Pfeil 126 in Figur 1 symbolisiert wird. Für die Herstellung des nächsten Produkts wird das Granulat dann dem Zylinder 112 zugeführt und von der Schnecke 114 eingezogen, aufgeschmolzen und homogenisiert. Bei diesem Vorgang bewegt sich die Schnecke 114 rotatorisch und translatorisch nach hinten in die entgegengesetzte Richtung zum Werkzeug 130, während sich die Schmelze im Schneckenvorraum 120 sammelt. Diese Phase wird Plastifizieren oder Dosieren genannt.

Das Dosiervolumen sollte höher als das für das Formteil benötigte Volumen sein. Dadurch bleibt nach den Einspritz- und Nachdruckphasen eine kleine Menge der Schmelze im Schneckenvorraum 120. Dieses Restvolumen wird als Restmassepolster oder einfach (Masse-)Polster bezeichnet und wird mit der Einstellung des Dosierwegs festgesetzt.

Während der Bewegung der Plastifizier- und Einspritzeinheit 110 und des Plastifiziervorgangs kühlt die Formmasse in der Kavität 140 ab, sodass das Formteil vollständig ausgeformt ist, wenn die Schnecke 114 an ihrer Ausgangsposition liegt. So wird das Werkzeug 130 geöffnet und das Formteil aus der Form entnommen bzw. ausgeworfen. Das Öffnen des Werkzeugs wird wiederum durch den Pfeil 136 in Figur 1 symbolisiert. Damit ist der Zyklus abgeschlossen und kann neu gestartet werden.

Ein solcher beispielhafter Spritzguss-Zyklus umfasst also die nachfolgend genannten Schritte:
1. Anfang Zyklus - Werkzeug schließen;
2. Plastifiziereinheit 110 vorbewegen;
3. Einspritzphase;
4. Nachdruckphase;
5. Plastifiziereinheit 110 zurückbewegen;
6. Dosieren;
7. Restkühlzeit;
8. Werkzeug 130 öffnen und Produkt auswerfen - Ende Zyklus.

Unter einem maschinellen Lernverfahren wird beispielsweise ein automatisiertes oder teilautomatisiertes ("maschinelles") Verfahren verstanden, welches Ergebnisse nicht durch im Vorhinein festgelegte Regeln generiert, sondern bei welchem vermittels eines Lernalgorithmus oder Lernverfahrens aus vielen Beispielen (automatisch) Regelmäßigkeiten identifiziert werden auf deren Basis dann Aussagen über zu analysierende Daten erzeugt werden.

Solche maschinellen Lernverfahren können beispielsweise als ein überwachtes Lernverfahren, ein teilüberwachtes Lernverfahren, ein unüberwachtes Lernverfahren oder auch ein bestärkendes Lernverfahren ("Reinforcement Learning") ausgebildet und eingerichtet sein.

Beispiele für maschinelle Lernverfahren sind z.B. Regressions-Algorithmen (z.B. lineare Regressionsalgorithmen), eine Erzeugung oder Optimierung von Entscheidungsbäumen (sogenannte "Decision Trees"), Lernverfahren für neuronale Netze, Clustering-Verfahren (z.B. ein sogenanntes "k-means-Clustering"), Lernverfahren für oder Erzeugung von Stützvektormaschinen ("Support Vector Machines" (SVM)), Lernverfahren für oder Erzeugung von sequentiellen Entscheidungsmodellen oder Lernverfahren für oder Erzeugung von Bayessche Modellen oder Netzen.

So ist ein Beispiel für ein maschinelles Lernverfahren die "Lineare Regression". Die lineare Regression ist eine parametrische Methode, bei der die Labels durch die Gewichtung aller Features angenähert werden. Bei einer Standardvariante des linearen Modells wird bei der Optimierung der mittlere quadratische Fehler (engl. Mean Squared Error, MSE) minimiert. Es gibt andere Varianten des linearen Modells, die sich nach der Form der Fehlerfunktion unterscheiden. Eine Variante ist z.B. der sogenannte Huber-Schätzer, bei dem z.B. ein Parameter *ε* eingeführt wird, um Ausreißer in den Inputs zu beseitigen.

Ein weiteres Beispiel für ein maschinelles Lernverfahren ist das k-Nächste-Nachbarn-Verfahren. Das Prinzip des k-Nächste-Nachbar (k-NN) Modells ist, für jeden Input die k nächsten Inputs zu ermitteln. Es ist eine nicht-parametrische Methode, bei der das Ähnlichkeitskriterium eine definierte Metrik ist. Diese Metrik kann eine Norm oder eine Distanz sein, die für alle Inputs bestimmbar ist. Aus der Nachbarschaft bzw. Ähnlichkeit der Inputs wird die Nachbarschaft der Labels hergeleitet.

Entscheidungsbäume sind ein weiteres Beispiel für ein ML-Modell, dem ein maschinelles Lernverfahren zugrunde liegt. Ein Entscheidungsbaum (engl. Decision Tree, DT) ist eine hierarchische Struktur, mit der eine nicht-parametrische Schätzung implementiert werden kann. Bei der Datenverarbeitung mit Entscheidungsbäumen werden die Inputs in lokalen Regionen aufgeteilt, deren Distanz zueinander durch eine bestimmte Metrik definiert wird. Diese lokalen Regionen sind die Blätter der Entscheidungsbäume.

Ein Entscheidungsbaum ist eine Sequenz von rekursiven Aufteilungen, die aus Entscheidungsknoten und Endknoten bzw. Blättern besteht. Bei jedem Entscheidungsknoten wird über eine definierte Funktion, die sogenannte Diskriminanzfunktion, eine diskrete Entscheidung getroffen, deren Ergebnis (ja oder nein) zu den folgenden Knoten führt. Wird ein Blattknoten erreicht, dann endet der Prozess und ein Ausgabewert wird geliefert.

Das Ergebnis einer solchen Anwendung eines solchen maschinellen Lernalgorithmus oder Lernverfahrens auf bestimmte Daten wird, insbesondere in der vorliegenden Beschreibung, als "Machine-Learning"-Modell oder ML-Modell bezeichnet. Ein solche ML-Modell stellt dabei das digital gespeicherte oder speicherbare Ergebnis der Anwendung des maschinellen Lernalgorithmus oder Lernverfahrens auf die analysierten Daten dar.

Dabei kann die Erzeugung des ML-Modells derart ausgebildet und eingerichtet sein, dass das ML-Modell durch die Anwendung des maschinellen Lernverfahrens neu gebildet wird oder ein bereits bestehendes ML-Modell durch die Anwendung des maschinellen Lernverfahrens verändert oder angepasst wird.

Beispiele für solche ML-Modelle sind Ergebnisse von Regressions-Algorithmen (z.B. eines linearen Regressions-Algorithmus), Neuronale Netze ("Neural Networks"), Entscheidungsbäume ("Decision Tree"), die Ergebnisse von Clustering-Verfahren (inklusive z.B. die erhaltenen Cluster oder Cluster-Kategorien, -Definitionen und/oder -Parameter), Stützvektormaschinen ("Support Vector Machines" (SVM)), sequenzielle Entscheidungsmodelle oder Bayessche Modelle oder Netze.

Neuronale Netze können z.B. sogenannte "Deep Neural Networks", "Feed Forward Neural Networks", "Recurrent Neural Networks"; "Convolutional Neural Networks" oder "Autoencoder-Neural-Networks" sein. Dabei wird die Anwendung entsprechender maschineller Lernverfahren auf neuronale Netze häufig auch als "Training" des entsprechenden Neuronalen Netzes bezeichnet.

Entscheidungsbäume können beispielsweise als sogenannte "iterative Dichotomizer 3" (ID3), Klassifikations- oder Regressionsbäume (CART) oder auch sogenannte "Random Forests" ausgebildet und eingerichtet sein.

Weiterhin können auch verschiedene Kategorien von ML-Modellen zu einem Gesamt-ML-Modell kombiniert werden. Eine solche Modelkombination (engl. Ensemble Learning) ist die Verknüpfung von verschiedenen ML-Modellen, um eine bessere Inferenz zu erreichen. Die kombinierten ML-Modelle bilden ein sogenanntes Ensemble. Es gibt verschiedene Methoden, wie Modelle zusammengeführt werden können, und zwar können sie per sogenanntem "Voting", "Bagging" oder "Boosting" kombiniert werden.

Zudem gibt es auch noch das sogenannte Automatisierte Maschinelle Lernen. Das automatisierte maschinelle Lernen (AutoML) ist ein Verfahren, nach dem für gegebene Aufgaben oder Datensätze ein Algorithmus versucht, die beste Lernstrategie aus einer bestimmten Anzahl von maschinellen Lernverfahren bzw. ML-Modellen zu bestimmen. Beim AutoML sucht der Algorithmus nach den besten Vorverarbeitungsschritten und den besten maschinellen Lernverfahren bzw. dem besten Ensemble. AutoML kann mit Meta-Learning kombiniert werden. Meta-Learning, auch "Learning to Learn" genannt, ist die Wissenschaft, bei der systematisch beobachtet wird, wie verschiedene Ansätze von ML bei einer Vielzahl von Lernaufgaben abschneiden, und dann aus diesen Erfahrungen (Metadaten) gelernt wird, um neue Aufgaben viel schneller zu lernen, als es sonst möglich wäre.

Eine gute Implementierung vom AutoML bietet die Software-Bibliothek AUTO-SKLEARN (https://www.automl.org/automl/auto-sklearn/). Dieses System kann ein Ensemble von bis 15 Schätzer bilden. Außerdem können dazu noch bis zu 14 Vorverarbeitungsmethoden für Features und vier Vorverarbeitungsmethoden für Datensätze genutzt werden.

Unter einem neuronalen Netz wird, zumindest im Zusammenhang mit der vorliegenden Beschreibung, z.B. eine elektronische Einrichtung verstanden, welche ein Netzwerk sogenannter Knoten umfasst, wobei in der Regel jeder Knoten mit mehreren anderen Knoten verbunden ist. Weiterhin wird unter einem neuronalen Netz im Zusammenhang mit der vorliegenden Beschreibung beispielsweise weiterhin ein in einer Speichereinrichtung gespeichertes Computer-Programm Produkt verstanden, welches beim Ablauf auf einem Computer ein solches Netzwerk gemäß der vorliegenden Beschreibung erzeugt. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "versteckten Knoten" ("hidden nodes") werden solche Knoten eines neuronalen Netzes verstanden, welche weder als Eingangs- noch als Ausgangs-Knoten ausgebildet sind.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens zwei sogenannte verdeckte Schichten, welche nur Knoten umfassen, die nicht Eingangsknoten oder Ausgangsknoten sind. Das heißt, die verdeckten Schichten haben keine direkten Verbindungen zu Eingangssignalen oder Ausgangssignalen.

Unter dem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt.

Das Neuronales Netz kann beispielsweise auch eine so genannte Auto-Encoder-Struktur aufweisen. Eine derartige Auto-Encoder-Struktur kann beispielsweise geeignet sein, um eine Dimensionalität der Daten zu reduzieren und beispielsweise so Ähnlichkeiten und Gemeinsamkeiten zu erkennen.

Ein Neuronales Netz kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes kann beispielsweise die Ausgestaltung als so genanntes "Deep-Believe-Network" sein.

Ein neuronales Netz kann beispielsweise auch eine Kombination von mehreren der vorstehend genannten Strukturen aufweisen. So kann beispielsweise die Architektur des neuronalen Netzes eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Die die einzelnen Knoten und deren Verbindungen beschreibenden Werte inklusive weiterer ein bestimmtes neuronale Netz beschreibende Werte können beispielsweise in einem das neuronale Netz beschreibenden Wertesatz gespeichert werden. Ein solcher Wertesatz stellt dann beispielsweise eine Ausgestaltung des neuronalen Netzes dar. Ein solcher Wertesatz kann z.B. auch im Rahmen eines Computerprogramms, welches das neuronale Netz realisiert, gespeichert sein. Wird ein solcher Wertesatz nach einem Training des neuronalen Netzes gespeichert, z.B. im Rahmen eines das neuronale Netz realisierenden Computerprogramms oder gesondert, so wird mit dem gesamten gespeicherten Computerprogramm oder Wertesatz beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz und/oder das entsprechende Computerprogramm, welche diesem neuronalen Netz zugeordnet sind, dann zu speichern und als Ausgestaltung des trainierten neuronalen Netzes in ein zweites System zu transferieren.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Zum Training eines neuronalen Netzes, z.B. gemäß der vorliegenden Beschreibung, kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netz dann durchaus auf einem niedriger-performanten System durchgeführt werden können. Solche weiteren Arbeiten und/oder Datenanalysen mit dem trainierten neuronalen Netz können zum Beispiel auf einem Applikationsmodul und/oder auf einer Steuereinrichtung, einer Speicherprogrammierbaren Steuerung oder einer modularen Speicherprogrammierbaren Steuerung oder weiteren entsprechenden Einrichtungen gemäß der vorliegenden Beschreibung erfolgen.

Insbesondere kann beispielsweise das Training des neuronalen Netzes als ein sogenanntes überwachtes Lernen ausgebildet und eingerichtet sein. Hierbei kann beispielsweise ein sogenanntes tiefes neuronales Netz verwendet werden. Als Lernverfahren kann beispielsweise ein "Deep Learning" Lernverfahren eingesetzt werden. Dabei können Trainingsdaten zum Training des neuronalen Netzes z.B. derart ausgebildet und eingerichtet sein, dass erfasste ein oder mehrere Prozessparameter einem Zustand oder einer Kenngröße der Spritzguss-Vorrichtung zugeordnet sind - z.B. einer Gewichtsgröße eines gefertigten Produkts. Diese erfassten ein oder mehreren Prozessparameter können beispielsweise zu einem bestimmten Zeitpunkt erfasst sein oder auch in einem bestimmten vorgegebenen oder vorgebbaren Zeitraum erfasst worden sein. Dies Zuordnen eines Zustands oder einer Kenngröße zu bestimmten ein oder mehreren Sensorwerten wird häufig als sogenanntes "Labeling" der Sensordaten mit den genannten Daten bezeichnet.

Weiterhin kann das überwachte Lernen beispielsweise auch derart ausgebildet und eingerichtet sein, dass Trainingsdaten derart gebildet werden, dass beispielsweise einer Zeitreihe von Prozessparametern beispielsweise eine oder mehrere der vorstehend genannten Kenngrößen - z.B. von Gewichtsgrößen gefertigter Produkte - zugeordnet sind. Auf vergleichbare Weise können auch Zeitreihen von Prozessparametern, welche von verschiedenen Sensoren stammen, einem oder mehreren der vorstehend genannten Kenngrößen zugeordnet sein.

Maschinelles Lernen und/oder die Überwachung eines maschinellen Lernsystems arbeiten in zwei Hauptphasen: Training und Inferenz.

Das Training eines ML-Modells bezieht sich auf den Prozess der Verwendung eines maschinellen Lernalgorithmus zum Erstellen des Modells. Das Training beinhaltet die Verwendung eines Deep-Learning-Frameworks (z. B. TensorFlow) und eines Trainingsdatensatzes. IoT-Daten bieten eine Quelle für Trainingsdaten, die Datenwissenschaftler und Ingenieure verwenden können, um "Machine-Learning"-Modelle für eine Vielzahl von Anwendungsfällen zu trainieren, von der Fehlererkennung bis hin zu Consumer Intelligence.

Inferenz bezieht sich auf den Prozess der Verwendung eines trainierten maschinellen Lernalgorithmus, um eine Vorhersage zu treffen. IoT-Daten können als Eingabe für ein trainiertes Machine Learning-Modell verwendet werden und ermöglichen Vorhersagen, die die Entscheidungslogik auf dem Gerät, am Edge-Gateway oder an anderer Stelle im IoT-System steuern können.

Zur Verwendung als ML-Modell oder maschinelles Lernverfahren im Rahmen der vorliegenden Beschreibung können z.B. ein sogenannter "Huber-Schätzer" (ein spezielles Regressionsverfahren), eine sogenannter "Extra-Trees-Schätzer (Extremely-Randomized-Trees-Schätzer; eine vermittes des sogenannten "Baggings" erzeugte Kombination mehrerer Entscheidungsbäume), ein sogenannter "Histogramm-Gradient-Boosting-Schätzer" oder auch der vorstehend bereits genannte "AutoML-Schätzer" oder "AUTO-SKLEARN-Schätzer" verwendet werden. Für die genannten Huber-Schätzer, Extra-Trees-Schätzer und Histogramm-Gradient-Boosting-Schätzer sind beispielsweise entsprechende Algorithmen in der Software-Bibliothek "sklearn" (https://scikit-learn.org) hinterlegt. Der AutoML-Schätzer bzw. die Software-Bibliothek AUTO-SKLEARN ist beispielsweise unter https://www.automl.org/automl/auto-sklearn/ verfügbar.

Dabei kann eine Gewichtsgröße im Rahmen der vorliegenden Beschreibung beispielsweise eine Masse oder ein Gewicht eines entsprechenden Produkts oder eine aus einer solchen Masse und/oder einem solchen Gewicht abgeleitete Größe sein.

Die erste Gewichtsgröße sowie die mindestens eine Vorgänger-Gewichtsgröße kann beispielsweise die Gewichtsgröße eines nach der Herstellung in der Spritzguss-Maschine aus dem entsprechenden Werkzeug entnommenen Produkts sein. Weiterhin kann die genannte Gewichtsgröße auch eine Gewichtsgröße eines nach Abschluss des Herstellungsprozesses noch im Werkzeug befindlichen Produkts sein. Die genannten Gewichtsgrößen können beispielsweise auch ein während des Herstellungsprozesses des Produkts ermittelte Gewichtsgröße eines oder mehrerer entsprechender Zwischenprodukte sein.

Dabei kann eine Gewichtsgröße beispielsweise durch Wiegen eines entsprechenden Produkts oder Zwischenprodukts ermittelt werden, beispielsweise auf einer gesonderten Wiegeeinrichtung oder auch einer entsprechend in der Spritzgussmaschine oder dem Werkzeug verbauten Wiegeeinrichtung oder einer vergleichbaren Sensorik. Die Gewichtsgröße kann weiterhin auch durch Ermittlung von anderen Produktkenngrößen des produzierten Produkts oder Zwischenprodukts ermittelt werden. So kann beispielsweise ein Volumen eines entsprechenden Produkts ermittelt oder abgeschätzt werden und unter Verwendung einer Dichte des verwendeten Produkt-Materials dann eine Gewichtsgröße ermittelt werden. Im Rahmen der vorliegenden Beschreibung umfasst eine Gewichtsgröße auch eine Volumengröße eines entsprechenden Produkts oder Zwischenprodukts.

Eine Gewichtsgröße eines Produkts oder Zwischenprodukts kann beispielsweise auch durch Interpolation oder Extrapolation aus weiteren Gewichtsgrößen bezüglich des Produkts ermittelt werden, wobei die weiteren Gewichtsgrößen beispielsweise nach oder im Rahmen des Herstellungsprozesses ermittelt wurden.

Produktionsparameter bezüglich der Herstellung eines Produkts können beispielsweise alle Messwerte, Maschinenparameter, Komponentenparameter und/oder Kenngrößen der verwendeten Spritzguss-Maschine und/oder ihrer Komponenten sein, die vor, während und/oder nach der Herstellung des Produkts ermittelt oder gemessen wurden. Weiterhin können Produktionsparameter auch alle Messwerte und Kenngrößen bezüglich eines hergestellten oder herzustellenden Produkts bzw. Zwischenprodukts sein, die vor, während und/oder nach der Herstellung des Produkts ermittelt oder gemessen wurden. Produktionsparameter können weiterhin auch Mess- und/oder Einstellwerte einer Umgebung der Spritzgussmaschine sein, wie beispielsweise eine Umgebungstemperatur, eines Luftdrucks, einer Luftfeuchtigkeit, einer Helligkeit oder vergleichbare Parameter. Produktionsparameter können beispielsweise durch eine entsprechende Sensorik innerhalb einer Spritzgussmaschine, oder in deren Umfeld, ermittelt werden. Weiterhin können Prozessparameter auch auf der Basis solcher Sensorwerte berechnet werden und/oder vermittels sogenannter virtueller Sensoren im Rahmen einer Simulation der Spritzgussmaschinen - zum Beispiel im Rahmen eines digitalen Zwillings - ermittelt werden.

Weiterhin können Produktionsparameter auch alle vorgegebenen, vorgebbaren oder sonstigen Steuerungsparameter sein, die im Rahmen der Steuerung der Spritzgussmaschine im Rahmen der Herstellung eines betreffenden Produkts vor, während und/oder nach der Produktion eines Produkts anfallen bzw. angefallen sind. Solche Steuerungsparameter können beispielsweise im Rahmen der Steuerung des Herstellungsprozesses des Produkts durch eine entsprechende Steuereinrichtung gesammelt, gespeichert und/oder ausgegeben werden. Solche Steuerungsparameter können beispielsweise auch als Einstell-Werte für eine Spritzguss-Maschine ausgebildet und eingerichtet sein. Solche können z.B. durch einen Benutzer unmittelbar an der Spritzgussmaschine eingestellt werden und/oder z.B. auch über ein HMI (HMI: "human machine interface", Benutzer-Ein-Ausgabe-Schnittstelle) in eine Steuerung für eine Spritzgussmaschine eingegeben werden. Weiterhin können solche Steuerungsparameter auch vermittels einer entsprechenden Anlagensimulation und/oder Simulation einer Steuereinrichtung z.B. im Rahmen eines digitalen Zwillings der gesamten Anlage oder der entsprechenden Steuerung ermittelt werden.

Dabei kann ein bestimmter Produktionsparameter beispielsweise ein einzelner Wert dieses Produktionsparameter sein, wie er während der Produktion eines entsprechenden Produkts erfasst und/oder ermittelt wurde. Weiterhin kann ein Produktionsparameter auch eine Zeitreihe von Werten dieses Produktionsparameter umfassen, die im Rahmen der Produktion eines entsprechenden Produkts erfasst wurde.

Beispiele für Produktionsparameter einer Spritzguss-Einrichtung sind:
- Temperatur Werkzeug,
- Temperatur Schmelze,
- Temperatur der Heizzonen,
- Druck an der Düse,
- Position Schnecke (linear und rotatorisch) (z.B. durch Nachdrücken),
- Ventilstellung der Düse,
- Betriebsmodus (Dosing/post Dec/Ejection/Injection/Holding): hat u.a. Auswirkung auf eine Geschwindigkeits- oder druckbasierte Regelung,
- durchgeflossene Masse in der Spritzdüse,
- Motorgeschwindigkeit und -moment beim Dosieren,
- Motorgeschwindigkeit und -moment beim Einspritzen,
- von der linearen Achse umgesetzte Kraft,
- Position beim Umschaltpunkt,
- Kraft beim Umschaltpunkt,
- Materialfeuchtigkeit,
- Raumtemperatur,
- Raumfeuchtigkeit,
- Luftdruck,
- Zeitliche Abschätzung der gesamten linear umgesetzten Energie,
- Nachdruck,
- Einspritzdruck,
- Einspritzgeschwindigkeit,
- Nachdruckzeit,
- Einspritzzeit,
- Angussgröße,
- Düsentemperatur,
- Schneckenposition,
- Staudruck.

Weitere Beispiele für Produktionsparameter sind (in Klammern jeweils ein Beispiel für eine Einheit des Produktionsparameters) :
- Düse Berührungsdruck - Istwert (Bar),
- Granulat Restfeuchtigkeit - Istwert (ppm),
- Lineare Schneckenkraft - Istwert (kN),
- Lineare Schneckenkraft - Sollwert (kN),
- Lineare Schneckenkraft beim Umschaltpunkt - Istwert (kN),
- Lineare Schneckenkraft beim Umschaltpunkt - Sollwert (kN),
- Lineare Schneckenposition - Istwert (mm),
- Lineare Schneckenposition bei Umschaltpunkt - Istwert (mm),
- Lineare Schneckenposition bei Umschaltpunkt - Sollwert (mm),
- Motordrehmoment beim Dosieren - Sollwert (Nm),
- Motordrehmoment beim Dosieren- Istwert (Nm),
- Motordrehmoment beim Füllvorgang- Istwert (Nm),
- Motordrehmoment beim Füllvorgang- Sollwert (Nm),
- Motordrehzahl beim Dosieren - Istwert (U/min),
- Motordrehzahl beim Dosieren - Sollwert (U/min),
- Motordrehzahl beim Füllvorgang - Istwert (U/min),
- Motordrehzahl beim Füllvorgang - Sollwert (U/min),
- Prozesszustand - Istwert
- Radiale Schneckenposition - Istwert (°),
- Endgewicht der Spritzgussteile - Istwert (g),
- Umgebungsfeuchtigkeit - Istwert (%),
- Umgebungsluftdruck - Istwert (hPa),
- Umgebungstemperatur - Istwert (°C),
- Zonentemperaturen (1 bis 7) - Istwert (°C).

Das ML-Modell ist im Rahmen der vorliegenden Erfindung derart ausgebildet und eingerichtet, dass nach Eingabe mindestens eines gewählten Produktionsparameters zumindest unter anderem eine Gewichtsgröße für ein hergestelltes Produkt ausgegeben wird, wobei der mindestens eine gewählte Produktionsparameter mindestens einen Parameter umfasst, der im Rahmen der Herstellung des hergestellten Produkts erfasst wurde.

Das Vorgängerprodukt kann beispielsweise als ein zum ersten Produkt baugleiches Produkt ausgebildet und eingerichtet sein, welches vermittels der Spritzguss-Vorrichtung zeitlich vor dem ersten Produkt produziert wurde. Weiterhin kann das Vorgängerprodukt auch als ein Produkt ausgebildet und eingerichtet sein, welches baugleich zum ersten Produkt ist, und zeitlich vor der Herstellung des hergestellten Produkts auf einer zur Spritzguss-Vorrichtung baugleichen oder ähnlichen Vorrichtung produziert wurde.

Die Vorgänger-Produktionsparameter können beispielsweise als Produktionsparameter ausgebildet und eingerichtet sein, welche im Rahmen der Herstellung des entsprechenden Vorgänger-produkts erfasst wurden. Dabei können diese beispielsweise von der für die Herstellung des Vorgänger-Produkts verwendeten Spritzguss-Vorrichtung, der entsprechend verwendeten Steuereinrichtung, und gegebenenfalls zugehörigen Benutzer Ein- und/oder Ausgabeeinrichtungen stammen bzw. von diesen erfasst oder weitergeleitet werden.

Dabei können die Vorgänger-Produktionsparameter beispielsweise derart ausgebildet und eingerichtet sein, dass zu jedem des mindestens einen Vorgänger-Produkts jeweils ein Satz von Produktionsparametern in den Vorgänger-Produktionsparametern an enthalten ist.

Die Gewichtsgröße kann beispielsweise als ein Gewicht oder eine Masse oder auch eine von einem oder beiden Größen abgeleitete Größe ausgebildet und eingerichtet sein.

Eine Gewichtsgröße kann beispielsweise durch eine entsprechende Wiegevorrichtung in einer Spritzguss-Vorrichtung oder auch mit einer externen Wiegevorrichtung gemessen werden. Weiterhin kann eine Gewichtsgröße beispielsweise auch durch eine entsprechende Volumenmessung, Volumenabschätzung oder Volumenermittlung erfolgen, indem als Gewichtsgröße dann z.B. unmittelbar das Volumen verwendet wird oder die Gewichtsgröße dann beispielsweise unter Verwendung einer Dichte des verwendeten Materials bestimmt wird. In diesem Fall kann ein entsprechendes Volumen beispielsweise unter Verwendung einer Menge der in das entsprechende Werkzeug eingebrachten Schmelze bestimmt, ermittelt und/oder abgeschätzt werden oder auch durch sonstige bekannte Volumenbestimmungs-Methoden.

Die Gewichtsgröße kann beispielsweise weiterhin auch durch Simulation eines Herstellungsprozesses eines Produkts innerhalb einer entsprechenden Spritzguss-Vorrichtung ermittelt werden.

Weiterhin kann die Gewichtsgröße beispielsweise als ein einzelner in Bezug auf das jeweilige Produkt erfasster oder ermittelter Wert ausgebildet und eingerichtet sein. Weiterhin kann die Gewichtsgröße auch als eine über einen gewissen Zeitraum im Rahmen der Herstellung des jeweiligen Produkts erfasste und/oder ermittelte Zeitreihe von entsprechenden Gewichtswerten ausgebildet und eingerichtet sein.

Dabei kann eine Gewichtsgröße beispielsweise unmittelbar gemessen werden oder auch aus gemessenen Werten abgeleitet. So kann beispielsweise eine Gewichtsgröße des ersten Produkts gemessen werden und aufgrund der gemessenen Gewichtsgröße eine erste Gewichtsgröße eines Zwischenprodukts während der Herstellung des ersten Produkts berechnet oder ermittelt werden - und diese erste Gewichtsgröße dann als erste Gewichtsgröße im Rahmen eines Verfahrens gemäß der vorliegenden Beschreibung verwendet werden.

Weiterhin kann eine Gewichtsgröße beispielsweise auch im Rahmen einer Simulation der Herstellung des Produkts durch die Spritzguss-Vorrichtung ermittelt werden. Dies kann z.B. durch einen im Rahmen der genannten Simulation definierten sogenannten "virtuellen Sensor" oder "Soft-Sensor" erfolgen.

Unter Verwendung der vorstehend genannten Möglichkeiten können auch entsprechende Zeitreihen für Gewichtsgrößen während der Herstellung des Produkts ermittelt werden.

So kann eine Zeitreihe für eine Gewichtsgröße beispielsweise vermittels einer Simulation des Herstellungsprozesses eines zugehörigen Produkts durch eine entsprechende SpritzgussVorrichtung ermittelt werden. Dabei kann beispielsweise eine gemessene Gewichtsgröße des hergestellten Produkts herangezogen werden oder auch ohne eine solche gemessene Gewichtsgröße vorgegangen werden. Weiterhin kann beispielsweise eine Zeitreihe für eine Gewichtsgröße ermittelt werden, indem von einer gemessenen Gewichtsgröße eines hergestellten Endprodukts entsprechende Gewichtsgrößen von während der Herstellung des Produkts vorliegenden Zwischenprodukten abgeschätzt bzw. simuliert, interpoliert oder extrapoliert werden.

Das Training des ML-Modells vermittels der Methoden des überwachten Lernens kann beispielsweise derart ausgebildet und eingerichtet sein, dass die ersten Produktionsparameter sowie die Vorgänger-Produktionsparameter und die mindestens eine Vorgänger-Gewichtsgröße in das ML-Modell eingegeben werden. Vom ML-Modell wird dann eine entsprechende Vorhersage-Gewichtsgröße für das erste Produkt ausgegeben. Vermittels der erfassten ersten Gewichtsgröße des ersten Produkts wird dann das ML-Modell trainiert, indem beispielsweise eine Fehlergröße unter Verwendung der erfassten ersten Gewichtsgröße und der Vorhersage-Gewichtsgröße ermittelt wird und damit ein Training des ML-Modells mit einer der Methoden des überwachten Lernens erfolgt.

Dabei werden die ersten Produktionsparameter, die Vorgänger-Produktionsparameter sowie die mindestens eine Vorgänger-Gewichtsgröße als Eingabe Werte, -Parameter, oder -Größen bezeichnet, während die erste Gewichtsgröße als sogenanntes "Label" für diese Eingabewerte im Rahmen des überwachten Lernens bezeichnet wird.

In einer Weiterbildung der Erfindung ist das Verfahren weiterhin derart ausgebildet und eingerichtet, dass das Erfassen und/oder Ermitteln der Produktionsparameter und/oder der Vorgänger-Produktionsparameter zumindest teilweise vermittels Sensoren der Spritzguss-Vorrichtung und/oder Steuergrößen für die Spritzguss-Vorrichtung erfolgt und/oder
dass das Erfassen und/oder Ermitteln der ersten Gewichtsgröße des ersten Produkts und/oder der mindestens einen Vorgänger-Gewichtsgröße des mindestens einen Vorgänger-Produkts, über eine Wiege-Einrichtung erfolgt.

Dabei kann das Erfassen der Produktionsparameter bzw. Vorgänger-Produktionsparameter beispielsweise zumindest teilweise mit entsprechenden Sensoren der Spritzguss-Vorrichtung erfolgen. Solche Sensoren können beispielsweise Drucksensoren, Temperatursensoren, Drehmomentsensoren, Kraftsensoren, Strömungssensoren oder vergleichbare Sensoren sein.

Weiterhin kann das Erfassen und/oder Ermitteln von Produktionsparametern bzw. Vorgänger-Produktionsparameter ganz oder teilweise auch durch eine Simulation, Interpolation oder Extrapolation bestimmt werden.

Produktionsparameter und/oder Vorgänger-Produktionsparameter können zumindest teilweise als Werte sogenannter virtueller Sensoren ausgebildet und eingerichtet sein. Dabei können virtuelle Sensoren beispielsweise im Rahmen einer Simulation einer Spritzgussvorrichtung definiert oder festgelegt sein. So kann beispielsweise anhand bestimmter Eingabeparameter, wie beispielsweise Einstellwerte und/oder Sensorwerte realer Sensoren der Spritzguss-Vorrichtung, eine Simulation der Spritzguss-Vorrichtung erfolgen, und im Rahmen dieser Simulation dann ein entsprechender Wert eines virtuellen Sensors ermittelt werden. Weiterhin können Werte zu solchen virtuellen Sensoren auch analytisch aus gemessenen Sensor- und/oder Einstellwerten der Spritzguss-Vorrichtung berechnet werden.

Weiterhin kann das Erfassen und/oder Ermitteln der Produktionsparameter und/oder der weiteren Produktionsparameter und/oder der ersten Gewichtsgröße und/oder der mindestens einen Vorgänger-Gewichtsgröße zumindest teilweise vermittels einer computerimplementierten Simulation der SpritzgussVorrichtung erfolgen.

Es kann auch vorgesehen sein, dass die erste Gewichtsgröße und/oder die mindestens eine Vorgänger Gewichtsgröße jeweils einem fertigen aus der Spritzgussvorrichtung entnommenen oder entnehmbaren Produkt zugeordnet ist.

Weiterhin kann in einer alternativen Ausgestaltung die erste Gewichtsgröße und/oder die mindestens eine Vorgänger-Gewichtsgröße auch jeweils einem Zwischenprodukt zugeordnet sein, welches im Rahmen der Herstellung eines Produkts entsteht. Dabei kann die erste Gewichtsgröße beispielsweise wiederum durch eine Gewichtsmessung ermittelt werden oder beispielsweise durch eine entsprechende Volumenmessung und/oder -abschätzung, und optional unter Verwendung einer Dichte des verwendeten Materials berechnet werden. Weiterhin kann eine entsprechende Gewichtsgröße eines solchen Zwischenprodukts auch beispielsweise durch Simulation eines Herstellungsprozesses für ein Produkt in einer entsprechenden SpritzgussVorrichtung ermittelt werden.

Die erste Gewichtsgröße und/oder die mindestens eine Vorgänger-Gewichtsgröße kann auch jeweils als eine Zeitreihe von Gewichts-Einzelgrößen ausgebildet und eingerichtet sein.

Dabei besteht eine Zeitreihe aus mindestens zwei während eines Produktionsprozesses eines Produkts erfassten und/oder ermittelten Gewichtsgrößen. Insbesondere kann eine Zeitreihe aus mindestens zwei, zu verschiedenen Zeitpunkten während eines Produktionsprozesses eines Produkts erfassten und/oder ermittelten, Gewichtsgrößen bestehen.

Weiterhin kann jede Gewichts-Einzelgröße einer Zeitreihe einem Zwischen-Produkt zu einem vorgegebenen oder vorgebbaren Zeitpunkt im Rahmen der Herstellung des jeweiligen Produkts zugeordnet sein.

Dabei können die einzelnen Gewichtswerte einer Zeitreihe beispielsweise jeweils durch eine Gewichtsmessung, eine Gewichtsermittlung und/oder eine Gewichtsberechnung erfolgen. Dabei können verschiedene Gewichtswerte einer Zeitreihe auf verschiedene der genannten - oder auch weitere - Möglichkeiten bestimmt werden. Die Ermittlung eines Gewichts kann z.B. gemäß der vorliegenden Beschreibung durch eine Simulation, z.B. im Rahmen eines digitalen Zwillings der entsprechenden Spritzgieß-Vorrichtung, erfolgen. Die Berechnung kann z.B. gemäß der vorliegenden Beschreibung aus einem gemessenen, ermittelten und/oder abgeschätzten Volumen eines entsprechenden Produkts oder Zwischenprodukts erfolgen - z.B. unter Verwendung einer Dichte des Produkt-Materials.

Die vorstehend genannte Aufgabe wird weiterhin gelöst durch ein computerimplementiertes Verfahren zur Bestimmung einer Vorhersage-Gewichtsgröße eines vermittels einer SpritzgussVorrichtung hergestellten Produktes,
wobei das Verfahren die nachfolgend genannten Schritte umfasst:
- Erfassen und/oder Ermitteln von Produktionsparametern der Spritzguss-Vorrichtung während der Herstellung des Produkts,
- Erfassen und/oder Ermitteln von Vorgänger-Produktionsparametern der Spritzguss-Vorrichtung während der Herstellung mindestens eines Vorgänger-Produkts des Produkts, sowie jeweils mindestens einer Vorgänger-Gewichtsgröße des mindestens einen Vorgänger-Produkts,
- Ermittlung der Vorhersage-Gewichtsgröße des Produkts unter Verwendung eines vermittels eines Verfahrens gemäß der vorliegenden Beschreibung trainierten ML-Modells und unter Verwendung der Produktionsparameter, der Vorgänger-Produktionsparameter sowie der mindestens einen Vorgänger-Gewichtsgröße.

Dabei beschreibt das genannte Verfahren die Verwendung eines gemäß der vorliegenden Beschreibung trainierten ML-Modells zur Ermittlung eines aktuell gefertigten Produkts. Diese Nutzung wird auch als Inferenz unter Verwendung des ML-Modells bezeichnet.

Dabei können die Produktionsparameter, das Erfassen und/oder Ermitteln der Produktionsparameter, das Produkt, die Spritzguss-Vorrichtung, die Vorgänger-Produktionsparameter, das Erfassen und/oder Ermitteln der Vorgänger-Produktionsparameter sowie die mindestens eine Vorgänger-Gewichtsgröße und das mindestens eine Vorgänger-Produkt gemäß der vorliegenden Beschreibung ausgebildet und eingerichtet sein.

Das Produkt kann dabei wiederum jedes Produkt sein, welche sich mit einer Spritzguss-Vorrichtung herstellen lässt oder durch eine solche hergestellt wurde. Dabei können Produkte beispielsweise aus den verschiedensten Kunststoffmaterialien oder vergleichbaren Materialien, welche mit einer SpritzgussVorrichtung verarbeitbar sind, bestehen. Ein solches Material ist beispielsweise Polycarbonat oder jegliche Materialkombination, welche Polycarbonat enthält. Das Produkt kann auch aus verschiedenen Materialien oder Materialkomponenten oder Materialmischungen bestehen, soweit sie für eine Verarbeitung in einer Spritzguss-Vorrichtung geeignet sind oder verwendet werden.

Die Ermittlung der Vorhersage-Gewichtsgröße kann beispielsweise derart erfolgen, dass die Produktionsparameter, die Vorgänger-Produktionsparameter sowie die mindestens eine Vorgänger-Gewichtsgröße als Eingangsgrößen für das ML-Modell herangezogen werden, wobei die Ausgabe des ML-Modells dann die Vorhersage-Gewichtsgröße umfasst. Dabei können beispielsweise vor der Eingabe der Produktionsparameter, der Vorgänger-Produktionsparameter sowie der Vorgänger-Gewichtsgröße diese noch entsprechend zur Eingabe in das ML-Modell angepasst und/oder vorbereitet werden. Eine solche Anpassung kann beispielsweise eine Normierung, eine Reskalierung und/oder sonstige vergleichbare und im Rahmen von ML-Modellen übliche Vorbereitungs-Schritte für Eingabedaten umfassen.

Dabei kann das Verfahren beispielsweise derart ausgebildet und eingerichtet sein, dass die Ermittlung der Vorhersage-Gewichtsgröße bereits während der Herstellung des Produkts erfolgt. Dazu kann das Verfahren beispielsweise derart ausgebildet und eingerichtet sein, dass das Erfassen und/oder Ermitteln der Produktionsparameter der Spritzgruß-Vorrichtung bis zu einem oder mehreren vorgegebenen oder vorgebbaren Zeitpunkten während der Herstellung des Produkts erfolgt und dann die Ermittlung der Vorhersage-Gewichtsgröße unmittelbar nach dieser Erfassung und/oder Ermittlung oder einem späteren Zeitpunkt während der Herstellung des Produkts erfolgt.

Mit dieser Ausgestaltung ist es möglich, bereits während eines Herstellungsvorgangs eines Produktes mit der SpritzgussVorrichtung schon eine Masse eines späteren Endprodukts vorherzusagen. Bei einer Abweichung dieser vorhergesagten Masse von einer vorgebbaren oder vorgegebenen Ziel- oder Wunsch-Masse für das Produkt kann dann beispielsweise bereits während der Herstellung des Produkts in die zur Herstellung verwendeten Produktionsparameter, Steuerungsparameter oder Einstellungen der Spritzguss-Vorrichtung eingegriffen werden. Dabei können die Produktionsparameter und/oder Einstellungen der Spritzgrußvorrichtung dann beispielsweise derart geändert werden, dass die Masse des dann mit den geänderten Einstellungen fertig produzierten Produkts der Wunsch- oder Ziel-Masse des Produkts möglichst nahekommt.

Daher ermöglicht das vorstehend genannte Verfahren eine schnellere, einfachere und/oder flexiblere Überwachung und/oder Steuerung eines Spritzgruß-Prozesses.

Das computerimplementierte Verfahren kann beispielsweise auf einer Recheneinrichtung, in einer elektronischen Steuerung, in einem Controller, in einem EDGE Device, in einer Cloud und/oder in einer vergleichbaren Computereinrichtung ablaufen bzw. dort ausgeführt werden. Dabei kann beispielsweise ein entsprechendes Computerprogrammprodukt auf einer oder mehreren der genannten elektronischen Einrichtungen implementiert sein, welches beim Ablauf auf dieser elektronischen Einrichtung die Verfahrensschritte des genannten computerimplementierten Verfahrens erzeugt bzw. bewirkt.

Dabei kann nach der Bestimmung einer Vorhersage-Gewichtsgröße nach einem Verfahren gemäß der vorliegenden Beschreibung ein Abspeichern der Vorhersage-Gewichtsgröße in einer elektronischen Speichereinrichtung erfolgen. Weiterhin kann auch die Ausgabe der Vorhersage-Gewichtsgröße an einen Benutzer erfolgen, oder auch eine kommunikative Übertragung der ermittelten Vorhersage-Gewichtsgröße an eine weitere Computereinrichtung, Recheneinrichtung, Steuereinrichtung oder vergleichbaren elektronischen Einrichtung erfolgen.

Nachfolgend einer Speicherung, Ausgabe oder kommunikativen Übertragung der Vorhersage-Gewichtsgröße kann dann eine weitere Verarbeitung der Vorhersage-Gewichtsgröße erfolgen. Eine solche weitere Verarbeitung der Vorhersage-Gewichtsgröße kann beispielsweise als ein computerimplementiertes Verfahren ausgestaltet und eingerichtet sein, welches zumindest unter anderem eine Ermittlung von geänderten Produktionsparametern für die Spritzguss-Vorrichtung umfasst.

Dabei kann die elektronische Speichereinrichtung beispielsweise der Teil einer elektronischen Einrichtung sein, auf welcher auch das ML-Modell trainiert wurde. Weiterhin kann die elektronische Speichereinrichtung auch Teil einer weiteren elektronischen Einrichtung gemäß der vorliegenden Beschreibung sein.

Das beschriebene computerimplementiere Verfahren kann weiterhin ein Training des ML-Modells mit einem Verfahren gemäß der vorliegenden Beschreibung unter Verwendung der Produktionsparameter sowie eines Produktgewichts eines gemäß der vorliegenden Beschreibung gefertigten Produkts erfolgen.

Mit dieser Ausgestaltung ist es möglich, das ML-Modell, nachfolgend der Nutzung des ML-Modells zur Vorhersage einer Produktmasse eines gerade gefertigten Produkts, mit den entsprechenden Daten dieses Produktes gleich noch zu trainieren. Auf diese Weise ist es möglich, das Training parallel zur Nutzung des ML-Modells weiterzuführen und damit die Qualität einer Vorhersage von Produktgewichten unter Verwendung des ML-Modells gemäß der vorliegenden Beschreibung parallel zur Nutzung des ML-Modells weiter zu verbessern.

Auf diese Weise wird es möglich, die Überwachung und/oder Steuerung eines Spritzguss-Prozesses noch schneller, einfacher und/oder flexibler zu überwachen.

Dabei kann das Training des ML-Modells beispielsweise derart erfolgen, dass nach einer Herstellung des Produkts eine Gewichtsgröße des gefertigten Produkts gemäß der vorliegenden Beschreibung ermittelt wird. Danach erfolgt dann das Training des ML-Modells gemäß der vorliegenden Beschreibung unter Verwendung eines überwachten Lernverfahrens mit den während der Herstellung des Produkts erfassten und/oder ermittelten Produktionsparameter, den erfassten und/oder ermittelten Vorgänger-Produktionsparameter, der mindestens einen Vorgänger-Gewichtsgröße als Eingangsdaten für das ML-Modell, sowie der Gewichtsgröße des gefertigten Produkts als Label oder Kontrollgröße.

Die vorstehend genannte Aufgabe wird auch gelöst durch ein Steuerungsverfahren zur Steuerung der Herstellung eines Produkts vermittels einer Spritzguss-Vorrichtung umfassend die Schritte:
- Starten eines Produktionsablaufs zur Herstellung des Produkts mit der Spritzguss-Vorrichtung unter Verwendung von Start-Steuergrößen für die Spritzguss-Vorrichtung,
- Erfassen und/oder Ermitteln von aktuellen Produktionsparametern während des Produktionsablaufs,
- Ermittlung einer Produkt-Vorhersage-Gewichtsgröße unter Verwendung eines computerimplementierten Verfahrens gemäß der vorliegenden Beschreibung unter Verwendung zumindest Teilen der aktuellen Produktionsparameter als Produktionsparameter gemäß der vorliegenden Beschreibung,
- Bestimmung geänderter Steuergrößen unter Verwendung einer Abweichung der Produkt-Vorhersage-Gewichtsgröße von einer Produkt-Soll-Gewichtsgröße,
- Fortsetzen des Produktionsablaufs zur Herstellung des Produkts mit den geänderten Steuergrößen, oder Starten eines weiteren Produktionsablaufs zur Herstellung eines weiteren Produkts unter Verwendung der geänderten Steuergrößen.

Dabei kann das Produkt, das Herstellen des Produkts die Steuerung der Herstellung des Produkts, die SpritzgussVorrichtung, die Produktionsparameter, der Produktionsablauf sowie die Produkt-Vorhersage-Gewichtsgröße gemäß der vorliegenden Beschreibung ausgebildet und eingerichtet sein.

Das vorstehend genannte Steuerungsverfahren kann auch als ein computerimplementiertes Steuerungsverfahren ausgebildet und eingerichtet sein. Das computerimplementierte Steuerungsverfahren kann beispielsweise auf einer Recheneinrichtung, in einer elektronischen Steuerung oder Steuereinrichtung, einer speicherprogrammierbaren Steuerung, in einem Controller, in einem EDGE Device, in einer Cloud und/oder in einer vergleichbaren Computereinrichtung ablaufen. Dabei kann beispielsweise ein entsprechendes Computerprogrammprodukt auf einer oder mehreren der genannten elektronischen Einrichtungen implementiert sein, welches beim Ablauf auf dieser elektronischen Einrichtung die Verfahrensschritte des genannten computerimplementierten Verfahrens erzeugt bzw. bewirkt.

Das vorstehend genannte Verfahren ermöglicht eine Steuerung einer Spritzguss-Vorrichtung unter Verwendung eines ML-Modells gemäß der vorliegenden Beschreibung, welches gemäß der vorliegenden Beschreibung trainiert wurde. Vermittels eines solchen Verfahrens wird ebenfalls eine schnellere, einfachere und/oder flexiblere Überwachung und/oder Steuerung eines Spritzguss-Prozesses ermöglicht, da durch die Verwendung des ML-Modells, welches beispielsweise mit einer großen Zahl von Produktionsparameter trainiert werden kann, mit gleichbleibendem Aufwand eine große Zahl und/oder Auswahlmöglichkeiten von Produktionsparametern zur Produktionsüberwachung verwendet werden kann.

Dabei kann das Steuerungsverfahren vorzugsweise als ein computerimplementiertes Steuerungsverfahren ausgebildet und eingerichtet sein. Insbesondere kann das Steuerungsverfahren zumindest teilweise auf einer Steuereinrichtung für die Spritzguss-Vorrichtung ablaufen. Weitere Teile des Steuerungsverfahrens können beispielsweise auf einer getrennten Recheneinrichtung, einem Computer, einem EDGE Device und/oder einem speziell eingerichteten Zusatzmodul für die Steuereinrichtung ablaufen. Diese weiteren Teile können beispielsweise solche Anteile des Steuerungsverfahrens sein, welche die Verwendung eines ML-Modells beinhalten.

Das Steuerungsverfahren kann weiterhin beispielsweise derart ausgebildet und eingerichtet sein, dass eine Änderung von Steuergrößen gemäß dem beschriebenen Verfahren während der Produktion eines Produkts zu einem qualitativ verbesserten Produkt führt, verglichen mit dem Fall, dass die ursprünglichen Steuergrößen unverändert bis zur Fertigstellung des Produkts herangezogen werden. Dabei wird unter "qualitativ verbessert" jede Verbesserung der Produktqualität bezüglich Ziel-Gewicht des Produkts, Materialqualität, Ausformung des Produkts, Färbung des Produkts, und/oder vergleichbare Produkteigenschaften verstanden.

In einer vorteilhaften Ausgestaltung kann das Steuerungsverfahren in Echtzeit ausgeführt werden. In diesem Fall kann das Steuerungsverfahren derart in einer Recheneinrichtung implementiert sein, dass beim Ablauf des Steuerungsverfahrens in der Recheneinrichtung das Steuerungsverfahren in Echtzeit ausgeführt wird. Die Recheneinrichtung kann dabei beispielsweise eine Steuereinrichtung, ein Computer, ein EDGE Device und/oder eine vergleichbare Rechen- und/oder Steuereinrichtung sein.

Das Echtzeitverfahren kann dabei derart ausgebildet und eingerichtet sein, dass eine Antwortzeit beispielsweise kleiner 10 Sekunden, kleiner 1 Sekunde, kleiner 100 ms, kleiner 1 ms, oder auch kleiner 50 µs garantiert werden kann.

Dabei kann die Ermittlung der Produkt-Vorhersage-Gewichtsgröße beispielsweise unter Verwendung von zumindest Teilen der aktuellen Produktionsparameter sowie entsprechender Vorgänger-Produktionsparameter und der mindestens einen Vorgänger-Gewichtsgröße gemäß der vorliegenden Beschreibung erfolgen.

Steuergrößen sind ein Teil der Produktionsparameter und können alle Arten von Einstellwerten für die SpritzgussVorrichtung sein. Beispielsweise können Steuergrößen Steuerbefehle, Einstellungen und/oder vergleichbare zur Steuerung und/oder Einstellung der Spritzguss-Vorrichtung verwendete oder verwendbare Größen, Daten, Informationen oder Befehle sein.

Beispiele für solche Einstellwerte sind die Einspritzgeschwindigkeit, der Einspritzdruck, die Einspritzzeit, der Nachdruck, die Nachdruckzeit, die Restkühlzeit, die Schließkraft, die Abkühltemperatur, die Zylindertemperaturen, die Schneckendrehzahl, der Staudruck, der Dekompressionsweg und der Dosierweg.

Dabei können beispielsweise Steuergrößen oder Steuerbefehle aus vorgegebenen oder vorgebbaren Einstellwerten abgeleitet werden, oder auch unabhängig davon zur Steuerung der Spritzguss-Vorrichtung dieser zugeführt werden. Weiterhin können Einstellwerte auch aus anderen Steuergrößen abgeleitet werden oder abgeleitet worden sein. Einstellwerte können beispielsweise über einen Benutzer oder durch eine entsprechende Steuereinrichtung der Spritzguss-Vorrichtung zugeleitet werden und dort z.B. unmittelbar, von einer internen Steuereinrichtung oder von einem internen Controller umgesetzt werden.

Die Erfassung von Steuergrößen kann beispielsweise über eine entsprechende Steuereinrichtung, die zur Ausführung eines Steuerungsverfahrens gemäß der vorliegenden Beschreibung ausgebildet und eingerichtet ist und/oder auch eine interne Steuereinrichtung einer entsprechenden Spritzguss-Vorrichtung erfolgen. Weiterhin kann eine Erfassung von Steuergrößen beispielsweise auch über eine entsprechende Benutzereingabe/Ausgabe-Vorrichtung (z.B. ein sogenanntes HMI: "Human Machine Interface") erfolgen.

Unter der Produkt-Soll-Gewichtsgröße wird eine Gewichtsgröße gemäß der vorliegenden Beschreibung verstanden, welchen dem von der Spritzguss-Vorrichtung herzustellenden Produkt gemäß der vorliegenden Beschreibung zugeordnet wird oder ist. Sie stellt eine geplante, vorgegebene oder vorgesehene Gewichtsgröße für das Produkt dar. Insbesondere stellt die Produkt-Soll-Gewichtsgröße eine vorgegebene oder vorgesehene Gewichtsgröße für das Produkt dar, nachdem die Fertigung durch die Spritzguss-Maschine beendet ist - insbesondere, nachdem es weiterhin aus der Spritzgussmaschine entfernt wurde.

Dabei kann die Produkt-Soll-Gewichtsgröße beispielsweise vermittels einer Wiegeeinrichtung aus einem Vorlage-Produkt ermittelt oder bestimmt werden, wobei das Vorlage-Produkt als Modell, Prototyp, Entwurf oder Vorlage für das herzustellende Produkt dient.

Weiterhin kann die Produkt-Soll-Gewichtsgröße auch beispielsweise aus Planungsdaten oder CAD-Daten für das Produkt ermittelt werden. Dabei kann beispielsweise aus den Planungsdaten oder CAD-Daten ein Volumen für das herzustellende Produkt bestimmt werden, welches dann beispielsweise unmittelbar als Gewichtsgröße im Sinne der vorliegenden Beschreibung verwendet werden kann, oder z.B. über eine Dichte eines verwendeten Materials in eine Produkt-Soll-Gewichtsgröße für das herzustellende Produkt umgewandelt wird.

Außerdem kann beispielsweise die Produkt-Soll-Gewichtsgröße auch aus einer Simulation der Spritzguss-Vorrichtung und/oder des in der Spritzguss-Vorrichtung ablaufenden Prozesses ermittelt werden. So kann auch hier beispielsweise das Herstellen des Produkts in der Spritzguss-Vorrichtung derart simuliert werden, dass sich aus den erhaltenen Simulationsdaten eine Gewichtsgröße für das hergestellte Produkt ermitteln lässt. Dies kann beispielsweise wieder über eine Ermittlung eines Volumens des hergestellten Produkts durch die Simulation und eine daraus erfolgte Ermittlung der zugehörigen Gewichtsgröße, beispielsweise gemäß der vorstehenden Beschreibung, erfolgen.

Außerdem kann die Produkt-Soll-Gewichtsgröße beispielsweise auch durch einen Benutzer oder eine entsprechende Produkt-Vorgabe vorgegeben oder vorgebbar sein.

Die Abweichung der Produkt-Vorhersage-Gewichtsgröße von der Produkt-Soll-Gewichtsgröße kann beispielsweise als eine Differenz dieser beiden Größen, als Betrag einer solchen Differenz, als Quadrat einer solchen Differenz oder als jede weitere mathematische Größe ausgebildet und eingerichtet sein, welche sich zum Beschreiben der Abweichung der Produkt-Vorhersage-Gewichtsgröße von der Produkt-Soll-Gewichtsgröße eignet.

Zur Bestimmung von geänderten Steuergrößen kann weiterhin neben der Abweichung der Produkt-Vorhersage-Gewichtsgröße von der Produkt-Soll-Gewichtsgröße auch noch mindestens eine Vorgänger-Gewichtsgröße gemäß der vorliegenden Beschreibung herangezogen werden. Dabei kann beispielsweise eine Abweichung der Produkt-Vorhersage-Gewichtsgröße von der Produkt-Soll-Gewichtsgröße sowie von der mindestens einen Vorgänger-Gewichtsgröße für die Bestimmung der geänderten Steuergrößen herangezogen werden. Auf diese Weise kann beispielsweise eine gewisse Dynamik bei der Verwendung geänderter Steuergrößen berücksichtigt werden, wenn das vorliegend beschriebene Verfahren mehrfach hintereinander ausgeführt wird.

Unter der Bestimmung geänderter Steuergrößen wird im Rahmen der vorliegenden Beschreibung die Bestimmung mindestens einer geänderten Steuergröße verstanden. Weiterhin können im Rahmen der Bestimmung geänderter Steuergrößen auch mehrere oder auch alle von der Spritzguss-Vorrichtung zur Herstellung des Produkts oder eines weiteren Produkts verwendeten Steuergrößen geändert werden.

Die Bestimmung geänderter Steuergrößen kann beispielsweise ein Erhöhen oder ein Erniedrigen des Drucks innerhalb der Nachdruckphase oder ein Verlängern oder Verkürzen der Nachdruckphase selbst umfassen. Dies kann derart geschehen, dass die Nachdruckphase entsprechend der Abweichung der Produkt-Vorhersage-Gewichtsgröße von der Produkt-Soll-Gewichtsgröße angepasst wird.

Weiterhin kann die Bestimmung geänderter Steuergrößen eine Erhöhung oder Erniedrigung der Schmelztemperatur umfassen, um die Abweichung der Produkt-Vorhersage-Gewichtsgröße von der Produkt-Soll-Gewichtsgröße zu verringern. Eine solche Erhöhung oder Erniedrigung der Schmelztemperatur ist erfahrungsgemäß zu träge, um sie noch im laufenden Produktionsprozess des Produkts umzusetzen. Daher sind geänderte Steuergrößen, welche eine solche Veränderung der Schmelztemperatur umfassen, beispielsweise zum Starten eines weiteren Produktionsablaufs zur Herstellung eines weiteren Produkts unter Verwendung dieser geänderten Steuergrößen geeignet.

Weiterhin kann das Einspritzprofil, umfassend einen Einspritzdruck, eine Einspritzgeschwindigkeit bzw. ein Einspritz-Geschwindigkeitsprofil oder ein Einspritzdruck-Profil derart geändert werden, dass die Abweichung der Produkt-Vorhersage-Gewichtsgröße von der Produkt-Soll-Gewichtsgröße verringert wird. Da eine derartige Änderung von Steuergrößen instantan oder fast instantan erfolgen kann, sind geänderte Steuergrößen, welche eine solche Veränderung im Einspritzprofil umfassen, sowohl zum Fortsetzen des Produktionsablaufs zur Herstellung des Produkts mit den geänderten Steuergrößen als auch zum Starten eines weiteren Produktionsablaufs zur Herstellung eines weiteren Produkts unter Verwendung dieser geänderten Steuergrößen einsetzbar.

Dabei können die Steuergrößen beispielsweise wie nachfolgend beispielhaft genannt geändert werden:
Ist die Produkt-Vorhersage-Gewichtsgröße geringer als die Produkt-Soll-Gewichtsgröße, dann kann beispielsweise:
- der Einspritzdruck erhöht werden,
- die Einspritzgeschwindigkeit erhöht werden,
- der Druckwert für den Nachdruck erhöht werden,
- die Zylindertemperatur erhöht werden,
- der Schneckenstaudruck erhöht werden,
- die Werkzeugwandtemperatur erhöht werden, und/oder
- die Nachdruckzeit entsprechend verlängert werden.

Eine solche Veränderung von Steuergrößen kann beispielsweise verwendet werden, wenn ein Grund für eine zu geringe Produkt-Vorhersage-Gewichtsgröße eine unvollständige Füllung des Werkzeugs mit dem Spritzguss-Material ist.

Ist die Produkt-Vorhersage-Gewichtsgröße zu gering, weil sich Gasblasen im Produkt gebildet haben, können geänderte Steuergrößen beispielsweise:
- eine Reduktion der Zylindertemperatur,
- eine Reduktion des Schneckenstaudrucks,
- eine Reduktion der Schneckendrehzahl, und/oder
- eine Reduktion des Zylinderdurchmessers sein oder umfassen.

Ist die Produkt-Vorhersage-Gewichtsgröße größer als die Produkt-Soll-Gewichtsgröße, können sich beispielsweise Grate und/oder sogenannte Schwimmhäute beim hergestellten Produkt bilden oder gebildet haben. In diesem Fall kann beispielsweise eine Änderung von Steuergrößen z.B.:
- eine Erhöhung der Schließkraft des Werkzeugs,
- eine Reduktion des Einspritzdrucks,
- eine Reduktion des Druckwerts für den Nachdruck, und/oder
- eine Erhöhung der Zonentemperatur für die Schmelze umfassen.

Da insbesondere die Erhöhung oder Erniedrigung eines Drucks oder die Verlängerung einer bestimmten Einwirkzeit, wie beispielsweise einer Nachdruckzeit, instantan umgesetzt werden können, eignen sich eine solche Änderung von Steuergrößen sowohl für ein Fortsetzen des Produktionsablaufs zur Herstellung des Produkts mit geänderten Steuergrößen als auch zum Starten eines weiteren Produktionsablaufs zur Herstellung eines weiteren Produkts unter Verwendung der geänderten Steuergrößen.

Umfasst eine Änderung der Steuergrößen beispielsweise eine Erhöhung einer Schmelze-Temperatur oder auch einer Zylindertemperatur, so ist eine Änderung von Steuergrößen, welche eine solche Änderung umfasst, insbesondere für den Fall des Startens eines weiteren Produktionsablaufs zur Herstellung eines weiteren Produkts unter Verwendung der geänderten Steuergrößen geeignet.

Weitere Änderungsmöglichkeiten von Steuergrößen sowie der Betrag einer solchen Änderung kann beispielsweise der entsprechenden Fachliteratur entnommen werden.

Die Bestimmung geänderter Steuergrößen kann beispielsweise unter Verwendung von entsprechenden Tabellen oder Kennlinien für verschiedene Produktionsparameter, Einstellgrößen und/oder Steuergrößen erfolgen. Diese können z.B. digital in einer Recheneinrichtung, Steuereinrichtung oder einem ähnlichen Gerät hinterlegt sein und automatisiert ausgewertet werden. Die Bestimmung geänderter Steuergrößen kann beispielsweise auch unter Verwendung entsprechender mathematischer Formeln oder analytischer Verfahren erfolgen. Solche Formeln können beispielsweise der entsprechenden Fachliteratur oder dem entsprechenden Fachwissen eines Fachmanns für Spritzguss entnommen werden. Analytische Verfahren können beispielsweise eine Extrapolation oder Interpolation von entsprechenden Steuergrößen aus der Vergangenheit im Zusammenhang mit einer Abweichung der Produkt-Vorhersage-Gewichtsgröße von der zu erreichenden Produkt-Soll-Gewichtsgröße und gegebenenfalls entsprechenden Abweichungen der Produkt-Vorhersage-Gewichtsgröße von mindestens einer Vorgänger-Gewichtsgröße umfassen. Weiterhin können hier auch statistische Verfahren zur Bestimmung geänderter Steuergrößen, zumindest unter anderem, herangezogen werden.

Weiterhin kann zur Bestimmung geänderter Steuergrößen auch ein Steuergrößen-ML-Modell, vergleichbar einem ML-Modell gemäß der vorliegenden Beschreibung, herangezogen werden, welches als eine Eingangsgröße zumindest die Abweichung der Produkt-Vorhersage-Gewichtsgröße von der Produkt-Soll-Gewichtsgröße umfasst, und als Ausgabeparameter mindestens eine geänderte Steuergröße, vorzugsweise mindestens eine besonders geeignete geänderte Steuergröße, hat. Ein solches Steuergrößen-ML-Modell kann dann beispielsweise unter Verwendung von Daten entsprechender Versuchsreihen trainier werden, in welchen Abhängigkeiten von Abweichungen von Produkt-Vorhersage-Gewichtsgrößen von entsprechenden Produkt-Soll-Gewichtsgrößen in Abhängigkeit von ProduktionsparameterÄnderungen bestimmt werden.

Das Fortsetzen des Produktionsablaufs zur Herstellung des Produkts mit geänderten Steuergrößen kann dabei derart ausgebildet und eingerichtet sein, dass die Steuergrößen derart während des laufenden Betriebs des Produktionsablaufs zur Herstellung des Produkts geändert werden, dass dabei keine Unterbrechungen des Produktionsablaufs entstehen. Weiterhin kann das Fortsetzen des Produktionsablaufs zur Herstellung des Produkts mit geänderten Steuergrößen derart ausgebildet und eingerichtet sein, dass eventuelle Unterbrechungen im Rahmen der Änderung der Steuergrößen derart ausgebildet und eingerichtet sind, dass keine wesentlichen Auswirkungen solcher Unterbrechungen auf eine Qualität des hergestellten Produkts im Rahmen einer gewünschten Produktqualität entstehen. Dabei können zulässige Unterbrechungen beispielsweise von einer gewünschten Produktqualität abhängen.

Das Starten eines weiteren Produktionsablaufs zur Herstellung eines weiteren Produkts unter Verwendung der geänderten Steuergrößen kann derart ausgebildet und eingerichtet sein, dass nach der Herstellung des Produkts mit den Start-Steuergrößen eine entsprechende Änderung der Steuergrößen erfolgt und dann das weitere Produkt unter Verwendung der geänderten Steuergrößen hergestellt wird.

In einer alternativen Ausgestaltung kann das Verfahren auch derart ausgebildet und eingerichtet sein, dass eine Änderung der Steuergrößen bereits während der Herstellung des Produkts erfolgt und dann das weitere Produkt ebenfalls bereits zum Teil mit den geänderten Steuergrößen produziert wird.

In einer vorteilhaften Ausgestaltung kann das Steuerungsverfahren in Echtzeit ausgeführt werden oder zur Ausführung in Echtzeit ausgebildet und eingerichtet sein.

Insbesondere kann vorgesehen sein, dass das Verfahren in Echtzeit im Rahmen der Steuerung einer Spritzgussmaschine ausgeführt wird oder ausführbar ist.

Diese Ausgestaltung des Steuerungsverfahren ermöglicht es, auf durch eine entsprechende Abweichung bereits während der Produktion eines Produkts oder mehrerer Produkte zu reagieren und so eine schnellere, einfachere und/oder flexiblere Überwachung und/oder Steuerung des Spritzguss-Prozesses zu ermöglichen.

Unter Echtzeit wird der Betrieb eines Rechensystems, Regelungssystems oder Steuerungssystems verstanden, bei dem Programme zur Verarbeitung anfallender Daten derart ständig betriebsbereit sind, dass die Verarbeitungsergebnisse innerhalb einer vorgegebenen Zeitspanne bzw. Antwortzeit verfügbar sind (siehe z.B. DIN ISO/IEC 2382 oder DIN 44300). Die Daten können je nach Anwendungsfall nach einer zeitlich zufälligen Verteilung oder zu vorherbestimmten Zeitpunkten anfallen. Durch die Hardware und Software muss sichergestellt werden, dass keine Verzögerungen auftreten, welche die Einhaltung dieser Bedingung verhindern könnten. Die Verarbeitung der Daten muss dabei nicht besonders schnell erfolgen, sie muss nur garantiert schnell genug für die jeweiligen Anforderungen der entsprechenden Anwendung erfolgen. Die Daten können je nach Anwendungsfall nach einer zeitlich zufälligen Verteilung oder zu vorbestimmten Zeiten anfallen.

Unter einem Echtzeit-Betriebssystem wird ein Betriebssystem für eine Datenverarbeitungseinrichtung verstanden, welche derart ausgebildet und eingerichtet ist, dass Anfragen eines Anwenderprogramms, oder auch ein über eine Hardwareschnittstelle eintreffendes Signal, innerhalb einer im Vorhinein festgelegten oder festlegbaren Zeitspanne gesichert verarbeitet werden können. Hierbei ist wesentlich, dass es überhaupt eine solche zusicherbare Zeitspanne gibt. Wie lang diese Zeitspanne ist, ist nicht wesentlich für die Tatsache, dass ein bestimmtes Betriebssystem ein Echtzeit-Betriebssystem ist.

Ein Echtzeitbetriebssystem kann beispielsweise als EchtzeitBetriebssystem im Sinne der DIN 44300 ausgebildet und eingerichtet sein.

Die oben genannte Zeitspanne bzw. garantierte Antwortzeit kann beispielsweise 10 Sekunden, 1 Sekunde, 100 ms, 1 ms oder auch 50 µs oder darunter betragen.

Dabei kann das Steuerungsverfahren derart in Echtzeit ausgeführt werden, dass eine Unterbrechung des Verfahrensablaufs im Rahmen der Änderung der Steuergrößen, bzw. der Steuerungsparameter, die gemäß Echtzeitvorgaben garantierte Antwortzeit nicht übersteigt. Weiterhin kann das Steuerungsverfahren derart ausgebildet und eingerichtet sein, dass die Zeitspanne zwischen der Ermittlung der Produkt-Vorhersage-Gewichtsgröße und einer Änderung der Steuergrößen die gemäß Echtzeitvorgaben garantierte Antwortzeit nicht überschreitet. Das Steuerungsverfahren kann auch derart ausgebildet und eingerichtet sein, dass die Zeitspanne zwischen der Ermittlung der Produkt-Vorhersage-Gewichtsgröße und einer Fortsetzung des Prozessablaufs zur Herstellung des Produkts mit den geänderten Steuergrößen die gemäß Echtzeitvorgaben garantierte Antwortzeit nicht überschreitet.

Wird im Rahmen des Steuerungsverfahrens ein Steuerprogramm mit zyklischer Programmausführung verwendet, so kann die Ausführung des Steuerungsverfahrens in Echtzeit derart ausgebildet und eingerichtet sein, dass die sogenannte Zykluszeit (Zykluszeit: die Zeit zum Ablauf eines Programmzyklus des Steuerprogramms) kleiner oder gleich der gemäß EchtzeitVorgaben vorgeschriebenen maximalen Antwortzeit ist. Das Steuerungsverfahren kann in diesem Fall beispielsweise derart ausgebildet und eingerichtet sein, dass bei einer Bestimmung der geänderten Steuergrößen in einem ersten Zyklus des Programmablaufs des Steuerprogramms, das Fortsetzen des Produktionsablaufs mit den geänderten Steuergrößen in einem zweiten Zyklus des Programmablaufs des Steuerprogramms erfolgt. Dabei kann vorgesehen sein, dass der zweite Zyklus des Programmablaufs unmittelbar auf den ersten Zyklus des Programmablaufs folgt. Weiterhin kann vorgesehen sein, dass zwischen dem ersten und zweiten Zyklus des Programmablaufs eine vorgegebene oder vorgebbare Anzahl oder Mindestanzahl von Zyklen des Programmablaufs liegen.

Die vorstehend genannte Aufgabe wird auch gelöst von einem Steuerungssystem zur Steuerung einer Spritzguss-Vorrichtung, wobei die Spritzguss-Vorrichtung zur Herstellung eines Produkts ausgebildet und eingerichtet ist,
dadurch gekennzeichnet,
dass das Steuerungssystem zur Steuerung der SpritzgussVorrichtung vermittels eines Steuerungsverfahrens gemäß der vorliegenden Beschreibung ausgebildet und eingerichtet ist.

Das Steuerungssystem kann beispielsweise eine Steuereinrichtung umfassen, welche zur Steuerung der SpritzgussVorrichtung ausgebildet und eingerichtet ist.

Dabei kann beispielsweise die Ermittlung der Produkt-Vorhersage-Gewichtsgröße und auch die Bestimmung der geänderten Steuergrößen innerhalb der Steuereinrichtung erfolgen.

Weiterhin kann die Ermittlung der Produkt-Vorhersage-Gewichtsgröße und/oder die Bestimmung der geänderten Steuergrößen auch in einer weiteren Recheneinrichtung erfolgen. Diese weitere Recheneinrichtung kann beispielsweise als ein Computer, eine weitere Steuereinrichtung, ein EDGE-Device oder auch ein Applikationsmodul für die Steuereinrichtung ausgebildet und eingerichtet sein. Dabei können die Ermittlung der Produkt-Vorhersage-Gewichtsgröße und die Bestimmung der geänderten Steuergrößen in derselben weiteren Recheneinrichtung erfolgen oder auch in verschiedenen.

Die Steuereinrichtung kann jede Art von Computer oder Computersystem sein, welcher zur Steuerung eines Apparats oder Geräts ausgebildet und eingerichtet ist. Bei der Steuerung kann es sich auch um einen Computer, ein Computersystem oder eine sogenannte Cloud handeln, auf der eine Steuerungssoftware oder eine Steuerungssoftware-Anwendung, zum Beispiel eine Steuerungsanwendung, implementiert bzw. installiert ist. Eine solche in der Cloud implementierte Steuerungsanwendung kann z.B. als eine Applikation mit der Funktionalität einer speicherprogrammierbaren Steuerung ausgebildet und eingerichtet sein.

Die Steuereinrichtung kann weiterhin auch als ein sogenanntes EDGE-Device ausgebildet und eingerichtet sein, wobei ein solches EDGE-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das EDGE-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das EDGE Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet sein.

Die Steuereinrichtung kann beispielsweise auch als eine sogenannte speicherprogrammierbare Steuerung (SPS) ausgebildet und eingerichtet sein (im Englischen "programmable logic controller" bzw. PLC). Weiterhin kann die sicherheitsgerichtete Steuerungseinrichtung auch als eine sogenannte modulare speicherprogrammierbare Steuerung (modulare SPS) eingerichtet und ausgestaltet sein.

Bei einer speicherprogrammierbaren Steuerung, kurz SPS, handelt es sich um eine Komponente, die programmiert und eingesetzt werden kann, um eine Anlage oder Maschine zu regeln bzw. zu steuern. In speicherprogrammierbaren Steuerungen können spezifische Funktionen wie beispielsweise eine Ablaufsteuerung implementiert werden, so dass auf diese Weise sowohl die Eingangs- als auch die Ausgangssignale von Prozessen oder Maschinen gesteuert werden können. Definiert wird die speicherprogrammierbare Steuerung beispielsweise im Standard EN 61131 und/oder IEC 61499.

Um eine speicherprogrammierbare Steuerung an die Anlage bzw. Maschine anzubinden, kommen sowohl Aktoren, die im Allgemeinen an den Ausgängen der speicherprogrammierbaren Steuerung angeschlossen sind, als auch Sensoren zum Einsatz. Des Weiteren werden Statusanzeigen verwendet. Im Allgemeinen befinden sich die Sensoren an den SPS-Eingängen, wobei durch sie die speicherprogrammierbare Steuerung Informationen darüber erhält, was in der Anlage bzw. Maschine vonstattengeht. Als Sensoren gelten beispielsweise: Lichtschranken, Endschalter, Taster, Inkrementalgeber, Füllstandsensoren, Temperaturfühler. Als Aktoren gelten z.B.: Schütze zum Einschalten elektrischer Motoren, elektrische Ventile für Druckluft oder Hydraulik, Antriebssteuerungsmodule, Motoren, und Antriebe.

Die Realisierung eine SPS kann auf verschiedene Art und Weise erfolgen. Das heißt, sie kann z.B. als elektronisches Einzelgerät, als Softwareemulation, als sogenannte "virtuelle PLC" oder "Soft-PLC", oder als PC-Einsteckkarte verwirklicht werden. Häufig finden sich auch modulare Lösungen, im Rahmen derer die SPS aus mehreren Steckmodulen zusammengebaut wird. Solche Module können beispielsweise ein zentrales Steuerungsmodul, ein Eingabe-Ausgabe-Modul, ein Kommunikationsmodul, ein Umrichter-Modul, ein Applikationsmodul oder vergleichbare Module sein oder umfassen.

Unter einer virtuellen PLC oder einer sogenannten Soft-PLC wird eine speicherprogrammierbare Steuerung verstanden, welche als Softwareapplikation realisiert ist und auf einer Computereinrichtung, einem Industrie-PC oder sonstigen PC, einer Recheneinrichtung, oder z.B. auch einem EDGE-Device, ablaufen kann oder abläuft. Auch in diesem Fall gibt es die Möglichkeit eine virtuelle PLC oder Soft-PLC modular auszuführen. Dabei werden dann einzelne Funktionalitäten einer speicherprogrammierbaren Steuerung bzw. PLC als einzelne Software-Module ausgestaltet, welche z.B. über eine sogenannte Middleware und/oder einen internen Datenbus miteinander verbunden oder verbindbar sind. Solche Module können beispielsweise ein zentrales Steuerung-Software Modul (z.B. umfassend zumindest unter anderem die vom Standard IEC 61131 vorgegebenen Eigenschaften und Fähigkeiten), ein Kommunikationsmodul zur Ankopplung an einen Feldbus, ein Kommunikationsnetzwerk, an bestimmte Geräte oder Vorrichtungen, an ein Ethernet, einen OPC-UA- oder vergleichbare Kommunikationsnetze, ein Webserver-Modul, ein HMI-Modul (HMI: human machine interface) und/oder ein Applikationsmodul gemäß der vorliegenden Beschreibung sein.

Eine modulare speicherprogrammierbare Steuerung kann dabei derart ausgebildet und eingerichtet sein, dass mehrere Module vorgesehen sein können oder sind, wobei in der Regel neben einem sogenannten Zentralmodul, die zum Ablauf eines Steuerprogramm z.B. zur Steuerung einer Komponente, Maschine oder Anlage (bzw. eines Teils davon) ausgebildet und eingerichtet ist, ein oder mehrere Erweiterungsmodule vorgesehen sein können. Solche Erweiterungsmodule können beispielsweise als eine Strom-/Spannungsversorgung ausgebildet und eingerichtet sein oder auch zur Ein- und/oder Ausgabe von Signalen oder weiterhin auch als ein Funktionsmodul oder Applikationsmodul zur Übernahme spezieller Aufgaben (z.B. ein Zähler, ein Umrichter, Datenverarbeitung mit künstliche-Intelligenz-Methoden.

Beispielsweise kann ein Funktionsmodul oder Applikationsmodul auch als ein AI-Modul zur Ausführung von Aktionen unter Verwendung künstlicher Intelligenz-Verfahren oder maschineller Lernverfahren ausgebildet und eingerichtet sein. Ein solches Funktionsmodul kann beispielsweise ein Neuronales Netz oder ein ML-Modell gemäß der vorliegenden Beschreibung oder ein Steuergrößen-ML-Modell gemäß der vorliegenden Beschreibung umfassen.

Ein Edge-Device oder Edge-Gerät kann beispielsweise eine Applikation zur Steuerung von Vorrichtungen oder Anlagen umfassen. Beispielsweise kann eine solche Applikation als eine Applikation mit der Funktionalität einer speicherprogrammierbaren Steuerung ausgebildet und eingerichtet sein. Das EDGE Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das EDGE Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Ein Edge-Device kann weiterhin zur Realisierung zusätzlicher Funktionalitäten im Zusammenhang mit der Steuerung beispielsweiser einer Maschine, Anlage oder Komponente - oder Teilen davon - ausgebildet und eingerichtet sein. Solche Funktionalitäten können beispielsweise sein:
- Daten sammeln und Übertragen in die Cloud und/oder eine entsprechende Vorverarbeitung, Kompression und/oder Analyse solcher Daten;
- eine Analyse von Daten z.B. mit AI-Verfahren, z.B. mit neuronalen Netzen oder entsprechenden ML-Modellen. Das Edge-Device kann dafür z.B. ein ML-Modell umfassen.
- Management oder Durchführung eines Trainings eines neuronalen Netzes oder ML-Modells. Das Training selbst kann dabei zumindest teilweise im Edge Device selbst, oder aber zumindest u.a. auch in einer Cloud erfolgen. Erfolgt ein Training in einer Cloud, kann das Edge-Device z.B. dazu ausgebildet sein, das trainierte neuronale Netz oder ML-Modell herunterzuladen und nachfolgend zu verwenden.

Ein Applikationsmodul kann beispielsweise als ein HardwareModul ausgebildet und eingerichtet sein. Ein solches Hardwaremodul kann beispielsweise als baulich eigenständiges Modul ausgebildet und eingerichtet sein. Ein solches baulich eigenständiges Hardwaremodul kann beispielsweise ein Gehäuse aufweisen und/oder mechanische Elemente oder Vorrichtungen zur Kopplung mit der Steuereinrichtung bzw. zur mechanischen Integration in die Steuereinrichtung.

Weiterhin kann ein Applikationsmodul als ein Software-Modul ausgebildet und eingerichtet sein. In diesem Fall kann beispielsweise eine Steuereinrichtung dieses Software-Modul umfassen und die Steuereinrichtung weiterhin zur Ausführung dieses als Software-Modul ausgestalteten Applikationsmoduls ausgebildet und eingerichtet sein.

In einer vorteilhaften Ausgestaltung ist ein Applikationsmodul Teil der Steuereinrichtung. Dabei kann das Applikationsmodul beispielsweise logisch der Steuereinrichtung zugehörig sein. Weiterhin kann das Applikationsmodul mechanisch mit der Steuereinrichtung gekoppelt sein bzw. mechanisch in die Steuereinrichtung integriert sein. Das Applikationsmodul kann auch als eine Software-Applikation ausgebildet und eingerichtet sein, wobei die Steuereinrichtung dann das als Softwareapplikation ausgestaltete Applikationsmodul umfassen kann.

Ein Applikationsmodul kann als ein frei programmierbares Applikationsmodul ausgebildet und eingerichtet sein. Eine frei programmierbare Firmware ermöglicht es, eine frei programmierbare bzw. unabhängig programmierbare "Anwendung" oder "App" bereitzustellen, die als Teil der Firmware ausgeführt wird und/oder im Rahmen einer vom Applikationsmodul bereitgestellten Ablaufumgebung ausgeführt wird.

Ein frei programmierbares Applikationsmodul kann beispielsweise zur Ausführung von Software bzw. Programmen ausgebildet und eingerichtet sein, welche in einer Programmiersprache erstellt und ausgeführt werden, welche nicht von der übrigen Steuereinrichtung bzw. den restlichen Komponenten und/oder Modulen der Steuereinrichtung unterstützt wird. Insbesondere kann ein frei programmierbares Applikationsmodul beispielsweise zur Ausführung von Software bzw. Programmen ausgebildet und eingerichtet sein, welche in einer Programmiersprache erstellt und/oder ausgeführt werden, welche nicht durch den IEC-Standard IEC 61138 oder vergleichbare Standards bezüglich Steuerungseinrichtungen und/oder speicherprogrammierbaren Steuerungen als Programmiersprachen für derartige Einrichtungen festgelegt sind.

In einer vorteilhaften Ausgestaltung ist ein frei programmierbares Applikationsmodul nicht zum Ablauf von Programmen ausgebildet und eingerichtet, die in einer Programmiersprache gemäß IEC 61131, IEC 61499 oder einem vergleichbaren Standard erstellt wurden bzw. sind. Dies sind die Programmiersprachen: AWL (Anweisungsliste / engl. Instruction List (IL)), KOP (Kontaktplan / engl. Ladder Diagram (LD)), FBS oder FUP (Funktionsbaustein-Spache / engl. Function Block Diagram (FBD)), AS (Ablaufsprache / engl. Sequential Function Chart (SFC)) und ST (Struktuierter Text / engl. Structured Text (ST)).

Ein frei programmierbares Applikationsmodul für eine Steuereinrichtung kann beispielsweise derart ausgebildet und eingerichtet sein, dass es zum Ablauf einer Softwareapplikation zusätzlich zu einem in der Steuereinrichtung ablaufenden Steuerprogramms zur Steuerung der Maschine oder Anlage ausgebildet und eingerichtet ist. Ein derartiges frei programmierbares Applikationsmodul ermöglicht die Realisierung einer Funktionalität der Steuereinrichtung zusätzlich zu einer Standard-Steuerungsfunktionalität, die beispielsweise durch ein zentrales Steuerungsmodul für die Steuereinrichtung realisiert wird. Das zentrale Steuerungsmodul kann beispielsweise zum Ablauf des Steuerprogramms zur Steuerung der Maschine oder Anlage ausgebildet und eingerichtet sein. Das neutrale Steuerungsmodul kann beispielsweise auch gemäß dem Standard IEC 61131, IEC 61499 und/oder vergleichbaren Standards üblich speicherprogrammierbarer Steuereinrichtungen ausgebildet und eingerichtet sein oder zu mindestens eine derartige Funktionalität umfassen.

Beispiele für derartige Applikationsmodule können beispielsweise Hard- oder Software-Module zur Ausführung von Machine-Learning Applikationen sein. Weitere Beispiele für solche Applikationsmodule sind beispielsweise Hard- oder Software-Module zur Realisierung Boole'scher Prozessoren, zur Realisierung bzw. Durchführung von Simulationen bzw. dem Ablauf von Simulationsprogrammen, zur Programmierung bzw. Ausführung von mathematischen Algorithmen, analytischen Verfahren oder Big-Data Analysen, zum Ablauf eigenständiger Programme in einer oder mehrerer vorgegebenen Programmiersprachen (z.B. C, C++, Python, ...) oder vergleichbare Anwendungen oder Applikationen.

Ein Steuerungssystem gemäß der vorliegenden Beschreibung kann weiterhin zur Echtzeitausführung eines Steuerungsverfahrens gemäß der vorliegenden Beschreibung ausgebildet und eingerichtet sein.

Dazu kann das Steuerungssystem beispielsweise eine Steuereinrichtung zur Steuerung der Spritzgruß-Vorrichtung umfassen, welche zumindest unter anderem ein Echtzeit-Betriebssystem gemäß der vorliegenden Beschreibung umfasst.

Umfasst das Steuerungssystem mehrere Hardwarekomponenten, so kann das Steuerungssystem weiterhin derart ausgebildet sein, dass diese Hardwarekomponenten derart ausgebildet und eingerichtet sind und zusammenwirken, dass eine EchtzeitAusführung eines Steuerungsverfahrens gemäß der vorliegenden Beschreibung sichergestellt ist.

Weiterhin kann das Steuerungssystem ein Edge-Gerät umfassen, welches zur Ermittlung einer Produkt-Vorhersage-Gewichtsgröße gemäß der vorliegenden Beschreibung und/oder der Bestimmung geänderter Steuergrößen gemäß der vorliegenden Beschreibung ausgebildet und eingerichtet ist.

Dabei kann das Edge-Gerät oder Edge-Device gemäß der vorliegenden Beschreibung ausgebildet und eingerichtet sein

Das Steuerungssystem kann z.B. eine speicherprogrammierbare Steuerung umfassen, welche zur Steuerung der SpritzgussVorrichtung vermittels eines Steuerungsverfahrens gemäß der vorliegenden Beschreibung ausgebildet und eingerichtet ist. Dabei kann die speicherprogrammierbare Steuerung ein Applikationsmodul umfassen, welches zur Ermittlung der Produkt-Vorhersage-Gewichtsgröße gemäß der vorliegenden Beschreibung und/oder der Bestimmung geänderter Steuerungsparameter der vorliegenden Beschreibung ausgebildet und eingerichtet ist.

Dabei können die speicherprogrammierbare Steuerung und das Applikationsmodul beispielsweise gemäß der vorliegenden Beschreibung ausgebildet und eingerichtet sein.

Das Applikationsmodul kann dabei beispielsweise als ein sogenanntes AI-Modul oder ML-Modul zur Ausführung von Aktionen unter Verwendung künstlicher Intelligenz-Verfahren bzw. maschineller-Lernverfahren ausgebildet und eingerichtet sein - oder eine derartige Funktionalität umfassen. Ein solches Applikationsmodul kann beispielsweise ein Neuronales Netz oder ein ML-Modell gemäß der vorliegenden Beschreibung umfassen.

Weiterhin kann das Applikationsmodul auch zur Realisierung bzw. Durchführung von Simulationen bzw. dem Ablauf von Simulationsprogrammen, zur Programmierung bzw. Ausführung von mathematischen Algorithmen und analytischen Verfahren, oder auch als frei programmierbares Applikationsmodul ausgebildet und eingerichtet sein - oder derartige Funktionalitäten umfassen.

Weitere vorteilhafte Ausgestaltungen finden sich in den Unteransprüchen.

Im Folgenden wird die Erfindung beispielhaft mit Bezug auf die beigefügten Zeichnungen näher erläutert.

Die Figuren zeigen:
Figur 1: Schematische Darstellung eines Beispiels für eine Spritzgussmaschine;

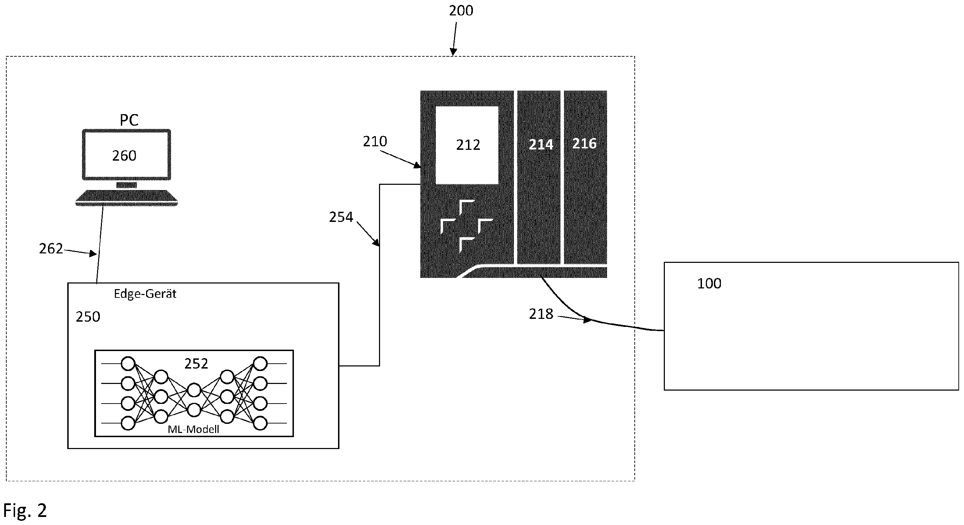

Figur 2: Ein erstes Beispiel für ein Steuerungssystem zur Steuerung einer Spritzgussmaschine gemäß Figur 1;

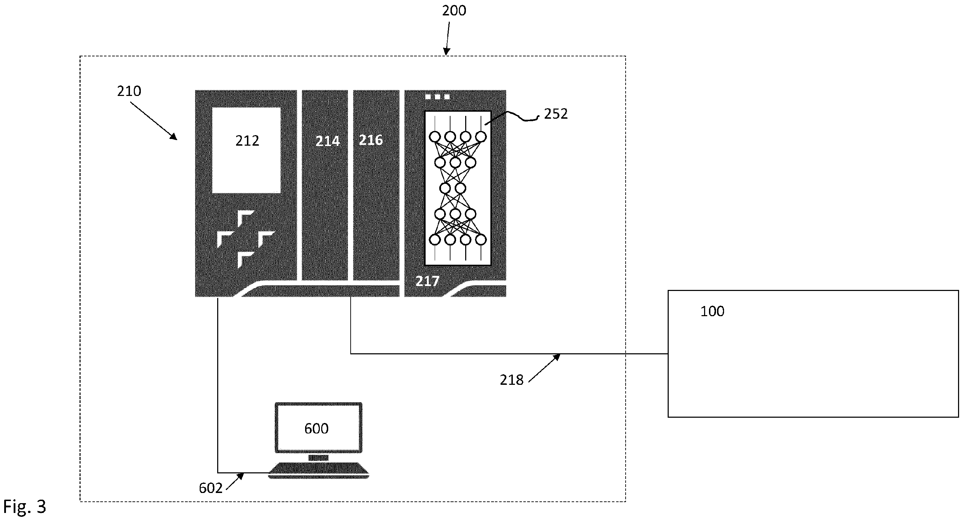

Figur 3: Ein zweites Beispiel für ein Steuerungssystem zur Steuerung einer Spritzgussmaschine gemäß Figur 1.

Figur 1 zeigt eine schematische Darstellung eines Beispiels für eine Spritzgussmaschine 100.

Eine Beschreibung und weitere Erläuterungen zu der in Figur 1 beispielhaft dargestellten Spritzgussmaschine 100 findet sich bereits in der vorstehenden Beschreibung im Rahmen der allgemeinen Beschreibung von Spritzgussmaschinen und beispielhaften Spritzgussverfahren.

Figur 2 zeigt eine schematische Darstellung der im Zusammenhang mit Figur 1 bzw. der vorliegenden Beschreibung bereits erläuterten Spritzgussmaschine 100 mit einem Steuerungssystem 200 zur Steuerung der Spritzgussmaschine 100.

Das Steuerungssystem 200 umfasst eine Steuereinrichtung 210, welche im in Figur 2 gezeigten Ausführungsbeispiel als speicherprogrammierbare Steuerung (SPS) 210 ausgebildet und eingerichtet ist. Dabei umfasst die speicherprogrammierbare Steuerung 210 ein Zentralmodul 212, welches zum Ablauf eines Steuerprogramms zur Steuerung der Spritzgussmaschine 100 ausgebildet und eingerichtet ist, sowie zwei Eingabe-Ausgabe-Module 214, 216. Die Eingabe-Ausgabe-Module 214, 216 und das Zentralmodul 212 sind über einen sogenannten Rückwandbus (nicht in Figur 2 dargestellt) kommunikativ miteinander verbunden. Das erste der Eingabe-Ausgabe-Module 214 ist weiterhin über eine Feldbusverbindung 218 mit der Spritzgussmaschine 100 verbunden.

Beim Ablauf eines Steuerprogramms zur Steuerung der Spritzgussmaschine 100 im Zentralmodul 212 werden entsprechende Steuerbefehle erzeugt, welche dann über das erste Eingabe-Ausgabe-Modul 214 und die Feldbusverbindung 218 an die Spritzgussmaschine 100 ausgegeben werden. Entsprechende Sensorwerte oder sonstige Informationen von der Spritzgussmaschine 100 werden wiederum über die Feldbusverbindung 218 und das erste Eingabe-Ausgabe-Modul 214 an das Zentralmodul 212 der speicherprogrammierbaren Steuerung 210 zurücckommuniziert. Dort können diese Sensorwerte oder sonstigen Informationen von der Spritzgussmaschine 100 dann beispielsweise als Eingangsgrößen für das im Zentralmodul 212 ablaufende Steuerprogramm verwendet werden.

Über eine OPC-UA-Kommunikationsverbindung 254 ist die Steuereinrichtung 210 weiterhin mit einem EDGE-Device 250 verbunden, welches als ein Industrie-PC 250, umfassend ein entsprechendes EDGE-Betriebssystem, ausgebildet ist. Das EDGE-Device 250 umfasst ein neuronales Netz 252 welches zumindest unter anderem zur Ermittlung einer Produkt-Vorhersage-Gewichtsgröße gemäß der vorliegenden Beschreibung ausgebildet und eingerichtet ist.

Das EDGE-Gerät 250 ist weiterhin wiederum über eine OPC-UA-Kommunikationsverbindung 262 mit einem PC 260 verbunden, wobei der PC 260 als Bedien- und/oder Benutzer-Schnittstelle (HMI: "Human Machine Interface") oder Benutzer-Eingabe-Ausgabe-Gerät für das EDGE-Device 250 und die Steuereinrichtung 210 ausgebildet und eingerichtet ist.

Das Steuerungssystem 200 ist nun derart ausgebildet und eingerichtet, dass Steuerungsparameter oder Steuergrößen für die Spritzgussmaschine 100 dynamisch an eine Abweichung einer vorgebbaren oder vorgegebenen Produkt-Zielmasse von einer im aktuellen Produktionsprozess vorhergesagten Produktmasse anpassbar sind. Dabei ist die Produkt-Zielmasse ein Ausführungsbeispiel für eine Produkt-Soll-Gewichtsgröße gemäß der vorliegenden Beschreibung.

Zu diesem Zweck wurde das neuronale Netz 252 derart trainiert, dass es zur Vorhersage einer im aktuellen Produktionsprozess erzielten oder erzielbaren Produktmasse ausgebildet und eingerichtet ist. Dazu wurden als Eingangswerte für ein solches Training Prozessparameter im Rahmen der Herstellung eines ersten Produkts sowie Prozessparameter im Rahmen der Herstellung von mindestens einem Vorgängerprodukt zu diesem ersten Produkt erfasst und verwendet, während als Label für diese Daten eine gemessene Masse des ersten Produkts nach dessen Fertigstellung verwendet wurde. Auf diese Weise ist das neuronale Netz 252 in der Lage, nach Eingabe von Prozessparametern eines herzustellenden, hergestellten oder in Herstellung befindlichen ersten Produkts eine erste Vorhersage-Masse dieses ersten Produkts zu prognostizieren.

Im aktuellen Reduktionsprozess ist nun eine Ziel-Masse für die zu produzierenden Produkte bekannt. Diese Ziel-Masse wurde z.B. über entsprechende Beispielprodukte oder auch aus CAD-Daten für das Produkt bestimmt.

Während der Herstellung eines Produkts in der Spritzgussmaschine 100 werden nun laufend über die Feldbusverbindung 218 aktuelle Sensor- und Maschinenparameter der Spritzgussmaschine 100 an die Steuereinrichtung 210 übermittelt und gemeinsam mit entsprechenden Steuerparametern der Steuereinrichtung 210 über die OPC-UA-Kommunikationsverbindung 254 an das EDGE Device 250 übermittelt. Diese Daten stellen ein Beispiel für Prozessparameter gemäß der vorliegenden Beschreibung dar und werden gemeinsam mit entsprechenden Prozessparametern von vor dem aktuell hergestellten Produkt produzierten Vorgängerprodukten und den dabei jeweils erzielten Produktmassen in das neuronale Netz 252 eingegeben. Eine Ausgabegröße des neuronalen Netzes 252 ist dann eine Vorhersage-Produktmasse für das gerade in Produktion befindliche Produkt.

Das EDGE-Device 250 ist weiterhin dazu ausgebildet und eingerichtet, eine Differenz der auf diese Weise ermittelten Vorhersageproduktmasse von der für das Produkt geltenden Ziel-Masse zu berechnen. Aufgrund entsprechenden im EDGE-Device 250 hinterlegten Steuerungsparameter-Tabellen werden dann geänderte Steuerungsparameter ermittelt, bei deren Verwendung erwartet wird, dass die Masse des gerade hergestellten Produkts der Zielmasse entspricht oder der Zielmasse zumindest näherkommt.

Für ein nächstes herzustellendes Produkt werden dann bereits von Anfang an die geänderten Steuerungsparameter herangezogen und wiederum der vorstehend genannte Verfahrensablauf durchgeführt.

Diese Abfolge von Verfahrensschritten wird so lange durchgeführt, bis keine, oder nur eine tolerierbare, Abweichung der aktuellen Produktmasse von der Ziel-Masse für das herzustellende Produkt vorliegt. Die dann ermittelten Steuerungsparameter werden dann für die Herstellung der nachfolgend hergestellten Produkte verwendet.

In regelmäßigen Zeitabständen kann dann weiterhin eine Abweichung der aktuellen Masse eines gerade produzierten Produktes von der gewünschten Ziel-Masse gemessen werden, und, wenn Abweichungen festgestellt werden, der vorstehend genannte Prozessablauf wieder gestartet werden. Auf diese Weise können die Steuerungsparameter auch beim laufenden Betrieb der Spritzgussmaschine 100 mit dem vorgestellten Verfahren immer wieder nachgeführt werden. Damit kann z.B. eine schleichende Veränderung oder Drift von Maschinen-, Material- und/oder Umgebungsparametern ausgeglichen werden.

In einer alternativen Ausgestaltung können beispielsweise die geänderten Steuerungsparameter im EDGE-Device 250 auch über ein zweites neuronales Netz ermittelt werden. Dabei wurde dieses zweite neuronale Netz derart trainiert, dass nach Eingabe von einer Abweichung einer Produkt-Vorhersage-Masse von einer Produkt-Ziel-Masse und den aktuellen Steuerungsparametern - und gegebenenfalls weiteren Prozessparametern - geänderte Steuerungsparameter bzw. Änderungswerte für Steuerungsparameter ausgegeben werden.

Figur 3 zeigt eine alternative Ausgestaltung des Steuerungssystems 200, wobei die Steuereinrichtung 210 wiederum als eine speicherprogrammierbare Steuerung ausgebildet und eingerichtet ist. Anstatt des EDGE-Devices 250 in Figur 2 umfasst die in Figur 3 dargestellte speicherprogrammierbare Steuerung 210 ein Applikationsmodul 217, das als sogenanntes ML-Modul (ML: "machine learning" bzw. maschinelles Lernverfahren) 217 ausgebildet und eingerichtet ist. Dabei umfasst das ML-Modul 217 ein neuronales Netz 252, wie es bereits im Zusammenhang mit Figur 2 erläutert wurde. Das ML Modul 217 ist ebenfalls über den Rückwandbus der SPS 210 mit den anderen Modulen 212, 214, 216 der SPS 210 verbunden. Das Applikationsmodul 217 kann dabei weiterhin gemäß der vorliegenden Beschreibung ausgebildet und eingerichtet sein.

Weiterhin zeigt Figur 3 wiederum den PC 600, der wie im in Figur 2 gezeigten Beispiel, als Benutzerschnittstelle zur Bedienung der SPS 210, des Applikationsmoduls 217 und/oder der Spritzgussmaschine 100 ausgebildet und eingerichtet ist. Dazu ist der PC 600 über eine Kommunikationsverbindung 602, beispielsweise mittels OPC-UA, mit der SPS 210 verbunden.

Beim in Figur 3 dargestellten Ausführungsbeispiel umfasst das Applikationsmodul 217 in Bezug auf das hier vorgestellte Steuerungsverfahren die Funktionalität, welche in der in Figur 2 dargestellten Ausgestaltung das EDGE-Device 250 zur Verfügung stellt. In der in Figur 3 dargestellten Ausgestaltung ist das neuronale Netz 252 auf die gleiche Weise trainiert, wie das in Figur 2 dargestellte neuronale Netz 252. Die Kommunikation der Prozessparameter zwischen dem Zentralmodul 212 der SPS 210, den Eingabe-/Ausgabe-Modulen 214, 216 und dem ML-Modul 217 erfolgt bei dem in Figur 3 dargestellten Ausführungsbeispiel über den Rückwandbus der SPS 210 (nicht in Figur 3 dargestellt). Die Daten, die dabei jeweils kommuniziert werden, sowie der gesamte Verfahrensablauf zur Steuerung der Spritzgussmaschine 100 entspricht dabei dem bereits im Zusammenhang mit Figur 2 beschriebenen Verfahrensablauf.

Die Ermittlung der geänderten Steuerungsparameter erfolgt im in Figur drei dargestellten Ausführungsbeispiel im ML-Modul 217 über ein weiteres neuronales Netz (nicht in Figur 3 dargestellt), wie es bereits im Zusammenhang mit dem Ausführungsbeispiel in Figur 2 als alternative Ausgestaltung zur Ermittlung der geänderten Steuerungsparameter erläutert wurde.

In einer weiteren Ausgestaltung des in Figur 3 dargestellten Ausführungsbeispiels kann die SPS 210 noch ein weiteres Applikationsmodul gemäß der vorliegenden Beschreibung umfassen, welches wiederum über den Rückwandbus der SPS 210 mit den übrigen Modulen 212, 214, 216, 217 der SPS 210 verbunden ist. Dieses Applikationsmodul kann beispielsweise als ein frei programmierbares Applikationsmodul ausgebildet und eingerichtet sein. Dabei kann dann die Ermittlung der geänderten Steuerungsparameter in einer für mathematische, statistische und analytische Algorithmen und/oder Simulationen vorteilhaft anwendbaren Programmiersprache und/oder Programmierumgebung erfolgen (z.B. unter Verwendung von Softwareumgebungen "Matlab^{®}" und/oder "Simulink^{®}" (https://de.mathworks.com/)).

In dieser Ausgestaltung werden die entsprechenden Prozessparameter, die Vorgänger-Prozessparameter sowie die Abweichung der Vorhersage-Produktmasse von der Ziel-Produktmasse an dieses weitere Applikationsmodul übermittelt und dort die geänderten Steuerungsparameter berechnet, abgeschätzt und/oder ermittelt. Diese werden dann wiederum über den Rückwandbus der SPS 210 an das Zentralmodul 212 der SPS 210 übermittelt, um dann über den Feldbus 218 an die Spritzgussmaschinen 100 übertragen zu werden. Diese setzt den Produktionsablauf dann mit den geänderten Steuerungsparametern fort bzw. beginnt die Produktion eines weiteren Produkts mit diesen geänderten Steuerungsparametern.

## Patentansprüche

1. Computerimplementiertes Verfahren zum Trainieren eines ML-Modells (252) vermittels eines maschinellen Lernverfahrens, wobei das trainierte ML-Modell (252) zur Ermittlung einer Vorhersage-Gewichtsgröße eines vermittels einer Spritzguss-Vorrichtung (100) hergestellten Produktes ausgebildet und eingerichtet ist,
das Verfahren umfassend die nachfolgenden Verfahrensschritte:
- Erfassen und/oder Ermitteln von ersten Produktionsparametern der Spritzguss-Vorrichtung (100) während der Herstellung eines ersten Produkts,
- Erfassen und/oder Ermitteln von Vorgänger-Produktionsparametern der Spritzguss-Vorrichtung (100) während der Herstellung mindestens eines Vorgänger-Produkts, sowie jeweils mindestens einer Vorgänger-Gewichtsgröße des mindestens einen Vorgänger-Produkts,
- Erfassen und/oder Ermitteln einer ersten Gewichtsgröße für das erste Produkt, und
- Trainieren des ML-Modells (252) vermittels einer Methode des überwachten Lernens mit den ersten Produktparametern, den weiteren Produktparametern, der mindestens einen Vorgänger-Gewichtsgröße, sowie der ersten Gewichtsgröße.

2. Verfahren gemäß Anspruch 1,
**dadurch gekennzeichnet,**
**dass** das Erfassen und/oder Ermitteln der Produktionsparameter und/oder der Vorgänger-Produktionsparameter zumindest teilweise vermittels Sensoren der Spritzguss-Vorrichtung (100) und/oder Steuergrößen für die Spritzguss-Vorrichtung erfolgt und/oder
**dass** das Erfassen und/oder Ermitteln der ersten Gewichtsgröße des ersten Produkts und/oder der mindestens einen Vorgänger-Gewichtsgröße des mindestens einen Vorgänger-Produkts, über eine Wiege-Einrichtung erfolgt.

3. Verfahren gemäß Anspruch 1 oder 2,
**dadurch gekennzeichnet,**
**dass** das Erfassen und/oder Ermitteln der Produktionsparameter und/oder der weiteren Produktionsparameter und/oder der ersten Gewichtsgröße und/oder der mindestens einen Vorgänger-Gewichtsgröße zumindest teilweise vermittels einer computerimplementierten Simulation der Spritzguss-Vorrichtung (100) erfolgt.

4. Verfahren gemäß einem der vorstehenden Ansprüche, **dadurch gekennzeichnet,**
**dass** die erste Gewichtsgröße und/oder die mindestens eine Vorgänger Gewichtsgröße jeweils einem fertigen aus der Spritzgussvorrichtung (100) entnommenen oder entnehmbaren Produkts zugeordnet ist.

5. Verfahren gemäß einem der vorstehenden Ansprüche, **dadurch gekennzeichnet,**
**dass** die erste Gewichtsgröße und/oder die mindestens eine Vorgänger-Gewichtsgröße jeweils als eine Zeitreihe von Gewichts-Einzelgrößen ausgebildet und eingerichtet ist.

6. Computerimplementiertes Verfahren zur Bestimmung einer Vorhersage-Gewichtsgröße eines vermittels einer Spritzguss-Vorrichtung (100) hergestellten Produktes,
das Verfahren umfassend die Schritte:
- Erfassen und/oder Ermitteln von Produktionsparametern der Spritzguss-Vorrichtung (100) während der Herstellung des Produkts,
- Erfassen und/oder Ermitteln von Vorgänger-Produktionsparametern der Spritzguss-Vorrichtung (100) während der Herstellung mindestens eines Vorgänger-Produkts, sowie jeweils mindestens einer Vorgänger-Gewichtsgröße des mindestens einen Vorgänger-Produkts,
- Ermittlung der Vorhersage-Gewichtsgröße des Produkts unter Verwendung eines vermittels eines Verfahrens gemäß der Ansprüche 1 bis 5 trainierten ML-Modells (252) und unter Verwendung der Produktionsparameter, der Vorgänger-Produktionsparameter sowie der mindestens einen Vorgänger-Gewichtsgröße.

7. Computerimplementiertes Verfahren gemäß Anspruch 6, **dadurch gekennzeichnet,**
**dass** weiterhin ein Training des ML-Modells (252) mit einem Verfahren gemäß einem der Ansprüche 1 bis 5 unter Verwendung der Produktionsparameter sowie eines Produktgewichts des gemäß Anspruch 6 gefertigten Produkts erfolgt.

8. Steuerungsverfahren zur Steuerung der Herstellung eines Produkts vermittels einer Spritzguss-Vorrichtung (100) umfassend die Schritte:
- Starten eines Produktionsablaufs zur Herstellung des Produkts mit der Spritzguss-Vorrichtung (100) unter Verwendung von Start-Steuergrößen für die Spritzguss-Vorrichtung (100),
- Erfassen und/oder Ermitteln von aktuellen Produktionsparametern während des Produktionsablaufs,
- Ermittlung einer Produkt-Vorhersage-Gewichtsgröße unter Verwendung eines computerimplementierten Verfahrens gemäß einem der Ansprüche 6 bis 7 unter Verwendung zumindest Teilen der aktuellen Produktionsparameter als Produktionsparameter gemäß einem der Ansprüche 6 bis 7,
- Bestimmung geänderter Steuergrößen unter Verwendung einer Abweichung der Produkt-Vorhersage-Gewichtsgröße von einer Produkt-Soll-Gewichtsgröße,
- Fortsetzen des Produktionsablaufs zur Herstellung des Produkts mit den geänderten Steuergrößen, oder Starten eines weiteren Produktionsablaufs zur Herstellung eines weiteren Produkts unter Verwendung der geänderten Steuergrößen.

9. Steuerungsverfahren gemäß Anspruch 8,
**dadurch gekennzeichnet,**
**dass** das Steuerungsverfahren in Echtzeit ausgeführt wird oder ausführbar ist.

10. Steuerungssystem (200) zur Steuerung einer Spritzguss-Vorrichtung (100), wobei die Spritzguss-Vorrichtung (100) zur Herstellung eines Produkts ausgebildet und eingerichtet ist, **dadurch gekennzeichnet,**
**dass** das Steuerungssystem (200) zur Steuerung der Spritzguss-Vorrichtung (100) vermittels eines Steuerungsverfahrens gemäß einem der Ansprüche 8 bis 9 ausgebildet und eingerichtet ist.

11. Steuerungssystem gemäß Anspruch 10,
**dadurch gekennzeichnet,**
**dass** das Steuerungssystem (200) zur Echtzeitausführung eines Steuerungsverfahrens gemäß einem der Ansprüche 8 bis 9 ausgebildet und eingerichtet ist.

12. Steuerungssystem gemäß einem der Ansprüche 10 oder 11, **dadurch gekennzeichnet,**
**dass** das Steuerungssystem (200) ein Edge-Gerät (250) umfasst, welches zur Ermittlung der Produkt-Vorhersage-Gewichtsgröße gemäß Anspruch 8 oder 9 und/oder der Bestimmung geänderter Steuergrößen gemäß Anspruch 8 oder 9 ausgebildet und eingerichtet ist.

13. Steuerungssystem gemäß einem der Ansprüche 10 bis 12, **dadurch gekennzeichnet,**
**dass** das Steuerungssystem (200) eine Speicherprogrammierbare Steuerung (210) umfasst, welche zur Steuerung der Spritzguss-Vorrichtung (100) vermittels eines Steuerungsverfahrens gemäß einem der Ansprüche 8 bis 9 ausgebildet und eingerichtet ist, wobei die Speicherprogrammierbare Steuerung (210) ein Applikationsmodul (217) umfasst, welches zur Ermittlung der Produkt-Vorhersage-Gewichtsgröße gemäß Anspruch 8 oder 9 und/oder der Bestimmung geänderter Steuerungsparameter gemäß Anspruch 8 oder 9 ausgebildet und eingerichtet ist.
